(19) Europäisches Patentamt
European Patent Office
Office européen des brevets

(11) EP 3 080 223 B1

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(21) Anmeldenummer: **14812217.9**

(22) Anmeldetag: **11.12.2014**

(51) Int Cl.:
***C09J 4/00*** ^(2006.01) ***C09J 5/02*** ^(2006.01)
***C09J 11/06*** ^(2006.01) ***C09J 175/14*** ^(2006.01)
***C08F 220/28*** ^(2006.01)

(86) Internationale Anmeldenummer:
**PCT/EP2014/077458**

(87) Internationale Veröffentlichungsnummer:
**WO 2015/086778 (18.06.2015 Gazette 2015/24)**

(54) **VORBEHANDLUNG VON SUBSTRATEN, DIE UNGESÄTTIGTE EINHEITEN AUFWEISEN**

PRETREATMENT OF SUBSTRATES WHICH HAVE UNSATURATED UNITS

PRÉ-TRAITEMENT DE SUBSTRATS PRÉSENTANT DES UNITÉS NON SATURÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2013 EP 13196730**
**17.02.2014 CH 197142014**

(43) Veröffentlichungstag der Anmeldung:
**19.10.2016 Patentblatt 2016/42**

(73) Patentinhaber: **Sika Technology AG**
**6340 Baar (CH)**

(72) Erfinder:
- **HAUFE, Markus**
  **CH-8048 Zürich (CH)**
- **EGLI, Patricia**
  **CH-8353 Elgg (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(56) Entgegenhaltungen:
**WO-A1-2010/025086 DE-A1- 4 308 528**
**US-A- 5 539 070**

EP 3 080 223 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Die vorliegende Erfindung betrifft ein Verfahren zur Behandlung von Substraten, umfassend a) das Aufbringen einer Zusammensetzung, die mindestens ein latentes Alkylboran umfasst und im Wesentlichen frei von Dekomplexierungsmitteln für das latente Alkylboran ist, auf ein Substrat (1), das ein ungesättigte Einheiten aufweisendes Material umfasst, b) das Aufbringen einer radikalisch härtbaren Substanz auf das mit dem latenten Alkylboran vorbehandelte Substrat (1), und c) das Aushärtenlassen der radikalisch härtbaren Substanz unter Bildung einer Kompositstruktur. Die vorliegende Erfindung betrifft ebenfalls nach dem vorstehend beschriebenen Verfahren hergestellte Kompositstrukturen. Durch die Behandlung von Substraten, die ungesättigte Einheiten aufweisende Materialien umfassen, mit einem latenten Alkylboran wird eine anschließende Anbindung der radikalisch härtbaren Substanz an die Oberfläche dieses Substrats wesentlich begünstigt, so dass das Verfahren insbesondere zur Verklebung von Substraten auf Basis von Materialien, die ungesättigte Einheiten aufweisen, oder zur Vorbehandlung für Füllmassen und Beschichtungen, eingesetzt werden kann.

### Stand der Technik

Elastomere Substrate aus Materialien mit ungesättigten Einheiten, wie beispielsweise EPDM (Ethylenpropylendienmischpolymer), NBR (Acrylonitrilbutadien-Kautschuk) oder SBR (Styrol-Butadien-Kautschuk), sind in der Regel für eine Verarbeitung mit Klebstoffen, Dichtstoffen oder Füllmassen nur schwer zugänglich. Insbesondere das Fügen oder Verkleben solcher Substrate ist mit großen Schwierigkeiten verbunden, da konventionelle Klebstoffe auf solchen Substraten eine nur unzureichende Haftung aufweisen.

Zum Verkleben solcher Substrate sind bisher verschiedene Ansätze beschrieben worden.

Der erste Ansatz beruht auf einer Kalt- oder Warmvulkanisation, wobei das Substrat zunächst aufgeraut und dann eine vulkanisierbare Kautschukmischung darauf aufgetragen wird. Diese wird anschließend unter Druck und/oder Wärme vulkanisiert. Dieses Verfahren wird beispielsweise bei der Runderneuerung von Reifen oder der Reparatur von Förderbändern verwendet. Nachteil dieses Verfahrens ist es jedoch, dass nur die dauerhafte Verbindung von chemisch ähnlichen Elastomeren möglich ist.

Ein weiterer Ansatz beruht auf einem strukturellen Verkleben von Elastomeren mit chemisch ähnlichen oder verschiedenen Substraten, wobei für diesen Zweck bisher im Wesentlichen nur die Verklebung mit Boran-initiierten Acrylatklebstoffen und Boran-Initiatoren beschrieben wurde. Derartige Klebstoffe sind beispielsweise in der US 5,718,977, der US 6,248,846 oder der US 6,383,655 beschrieben. In der US 2011/104508 A1 ist die Verklebung von Elastomeren und Materialien, wie Polyethylen, Polypropylen, thermoplastischen Olefinen (TPO), Polyamiden, syndiotaktischem Polystyrol oder Olefin enthaltenden Blockcopolymeren und fluorierten Polymeren, wie Tetrafluorethylen, beschrieben. Diese Dokumente behandeln primär die Verklebung von Substraten mit niedriger Oberflächenenergie, insbesondere Polypropylen, Polytetrafluoroethylen und Polyethylen hoher Dichte (HDPE), die keine ungesättigten Einheiten aufweisen.

In allen vorgenannten Stand-der-Technik-Dokumenten wird die Borverbindung als Katalysator für Acrylatkomponenten eingesetzt, wobei die Borverbindung nach Reaktion mit Luftsauerstoff unter Bildung von Radikalen reagiert, die die Härtung des Acrylatklebstoffs bewirken. Zu diesem Zweck wird der Katalysator kurz vor der Verarbeitung dem Klebstoff zugemischt, und bewirkt darin sofort eine Aushärtung des Materials. Nachteil der Verwendung solcher Zusammensetzungen ist es daher, dass der Klebstoff nach der Vermischung nur eine sehr kurze Offenzeit aufweist. Zudem sind die Klebstoffe in der Regel sehr teuer und nur unter Einschränkungen lagerstabil (der Klebstoff muss in der Regel kühl gelagert werden). Ein weiterer Nachteil solcher Klebstoffe besteht darin, dass sie teilweise nur einen sehr langsamen Festigkeitsaufbau aufweisen.

Ein dritter Ansatz besteht darin, elastische Substrate mit Hilfe von Kontaktklebstoffen zu verkleben. Solche Kontaktklebstoffe werden in der Regel in Lösungsmitteln, wie Ethylacetat, THF oder Heptan, formuliert. Nachteil dieses Ansatzes ist es jedoch, dass bei der Verklebung insbesondere von Kautschuken meist nur geringe Festigkeiten und eine begrenzte Alterungsbeständigkeit erzielt werden kann.

Eine weitere Möglichkeit zur Verklebung solcher Substrate besteht schließlich in der Verwendung von sehr reaktiver Isocyanat-Chemie, mit der eine Verbindung zu Substraten wie EPDM erreicht werden kann. Für solche Zwecke sind beispielsweise Zusammensetzungen auf Basis von Dicyclohexylmethan-4,4'-diisocyanat und Polypropylenglycolen, die zusätzlich weitere Isocyanat-Komponenten enthalten können, beschrieben worden. Die Verbundfestigkeiten sind in diesem Fall allerdings nur gering. Weiterhin wurde in der US 3,968,198 die Verwendung von Iodisocyanat, gegebenenfalls in Kombination mit Polyisocyanaten wie Toluylendiisocyanat oder Trimethylolpropan/Toluylendiisocyanat-Adukten beschrieben. Die Verwendung von Iodisocyanat ist jedoch wegen dessen hoher Reaktivität und Giftigkeit mit erheblichen Nachteilen verbunden.

Es besteht daher ein Bedarf an Verfahren, mit deren Hilfe es möglich ist, insbesondere elastische Substrate, umfassend oder bestehend aus Polymeren mit ungesättigten Doppelbindungen wie EPDM, NBR oder SBR, zu verkleben, wobei das Verfahren den Einsatz konventioneller Klebstoffe erlauben sollte und gleichzeitig eine gute Verbindung des Substrats mit den Klebstoffen erzielt wird. Vorzugsweise sollten mit dem Verfahren ähnliche Verklebungsergebnisse erzielt werden können, wie mit den vorstehend beschriebenen zweikomponentigen Acrylatklebstoffen, wobei jedoch an Stelle der Klebstoffe mit geringer Lagerstabilität solche zum Einsatz kommen sollen, die diesen Nachteil nicht aufweisen.
Bei den beschriebenen Substraten besteht ebenfalls das Problem, dass sich darauf aufgebrachte Lacke, Versiegelungsmaterialien oder Füllmassen relativ leicht von den Substraten lösen, insbesondere wenn die Substrate Erschütterungen, Deformationen oder Stößen ausgesetzt sind. Es besteht daher ebenso ein Bedarf an Verfahren, mit deren Hilfe es möglich ist, eine verbesserte Haftung von Lacken, Versiegelungsmaterialien oder Füllmassen auf elastischen Substraten zu erzielen.
Schließlich besteht ein Bedarf nach einfachen und kostengünstigen Verfahren zum Verbinden von Bandenden aus elastischen Materialien (im Rahmen dieses Dokuments auch als Splicen bezeichnet). Bei den zum diesem Zweck konventionell eingesetzten Verfahren werden zunächst die Verstärkungselemente von zwei Bandenden zumindest teilweise freigelegt, indem Bandmaterial von den Verstärkungselementen entfernt wird. Anschließend wird nicht-vulkanisierter Gummi in den Bereich, in dem das Bandmaterial entfernt wurde, eingebracht und das eingebrachte Material bei erhöhten Temperaturen vulkanisiert. Ein solches Verfahren ist beipielsweise in der DE 43 08 528 A1 beschrieben.
Nachteilig bei diesen Verfahren ist jedoch der hohe Energiebedarf, insbesondere für das abschließende Vulkanisieren, und der technische Aufwand, der für diesen Schritt erforderlich ist. So ist es in der Regel nicht möglich ein gerissenes Band an Ort und Stelle zu reparieren. Stattdessen muss das Band vollständig ausgebaut werden, um das Reparaturmaterial einfüllen und vulkanisieren zu können. Dies kann relativ lange dauern und hat entsprechend lange Standzeiten der Vorrichtung zur Folge.
Die vorliegende Erfindung löst diese Probleme.

## Beschreibung der Erfindung

Ein erster Aspekt der vorliegenden Erfindung, wie in den Ansprüchen angegeben, betrifft ein Verfahren zur Behandlung von Substraten, umfassend

a) das Aufbringen einer Zusammensetzung, die mindestens ein latentes Alkylboran umfasst und im Wesentlichen frei von Dekomplexierungsmitteln für das latente Alkylboran ist, auf ein Substrat (1), das ein ungesättigte Einheiten aufweisendes Material umfasst, das ein unpolares Kautschuk-artiges Material oder ein Kautschuk ist, das/der einen E-Modul, bestimmt gemäß DIN 53457, von ≤ 1000 MPa aufweist,
b) das Aufbringen einer radikalisch härtbaren Substanz auf das mit dem latenten Alkylboran vorbehandelte Substrat (1), und
c) das Aushärtenlassen der radikalisch härtbaren Substanz unter Bildung einer Kompositstruktur.

Wenn im Vorstehenden davon die Rede ist, dass die Zusammensetzung im Wesentlichen frei von Dekomplexierungsmitteln für das latente Alkylboran ist, so ist dies dahingehend aufzufassen, dass die Zusammensetzung vorzugsweise weniger als 5 Gew.-%, besonders bevorzugt weniger als 2 Gew.-% und ganz besonders bevorzugt keine nachweisbaren Mengen an Dekomplexierungsmitteln aufweist.
Ein Dekomplexierungsmittel, wie dieser Begriff hier verwendet wird, ist eine Verbindung, die bei Kontakt mit dem latenten Alkylboran dieses in ein aktives Alkylboran umwandelt, beispielsweise indem sich aus einem AlkylboranaminKomplex unter Freisetzung von Alkylboran ein Addukt aus dem Dekomplexierungsmittel mit dem Amin bildet. Nach Reaktion mit dem Dekomplexierungsmittel entsteht ein Alkylboran, das freie Radikale unter Polymerisationsbedingungen enthält oder solche generiert. Für Beispiele geeigneter Dekomplexierungsmittel wird auf die folgenden Ausführungen verwiesen.
Unter einem latenten Alkylboran ist im Rahmen der vorliegenden Erfindung ein Alkylboran zu verstehen, das in einer Form vorliegt, bei der eine Bildung von Radikalen nicht begünstigt wird. Dies kann beispielsweise der Fall sein, indem die vierte Koordinationsstelle des Bors nicht durch einen Substituenten blockiert ist, sondern beispielsweise das freie Elektronenpaar eines Stickstoffs oder Sauerstoffs bindet. Das latente Alkylboran liegt vorzugsweise in tetrakoordinierter Struktur vor. Aus dem latenten Alkylboran kann sich eine aktive Spezies beispielsweise durch Abdissoziation eines Liganden bilden, wobei am Bor eine freie Koordinationsstelle entsteht.
In einer bevorzugten Ausführungsform des vorstehend beschriebenen Verfahrens handelt es sich bei der radikalisch härtbare Substanz um einen Lack, eine Beschichtung, ein Versiegelungsmaterial, einen Klebstoff oder eine Füllmasse.
In einer weiteren Ausführungsform des vorstehend beschriebenen Verfahrens wird zwischen dem Schritt b) und dem Schritt c) ein weiterer Schritt durchgeführt, in dem das Substrat (1) mit einem Substrat (2) derart in Kontakt

gebracht wird, dass die radikalisch härtbare Substanz zwischen den beiden Substraten angeordnet ist, und die radikalisch härtende Substanz in Form eines Klebstoffs vorliegt.

Bei dem ungesättigte Einheiten aufweisenden Material handelt es sich um ein unpolares, Kautschuk-artiges Material, besonders bevorzugt um einen Kautschuk, und insbesondere um EPDM, NBR, SBR oder ein Gemisch davon.

Das unpolare, Kautschuk-artige Material bzw. der Kautschuk sollte ein E-Modul, bestimmt gemäß DIN 53457, von ≤ 1000 MPa, bevorzugt im Bereich von 1 bis 250 MPa und besonders bevorzugt 5 bis 60 MPa aufweisen.

Es ist weiterhin bevorzugt, dass das Substrat (1) aus dem ungesättigte Einheiten aufweisenden Material besteht.

Hinsichtlich des Substrats (2) unterliegt die vorliegende Erfindung keinen relevanten Beschränkungen. Falls für das Substrat (2) jedoch ebenfalls ein ungesättigte Einheiten aufweisendes Material, wie beispielsweise EPDM, NBR, SBR oder ein Gemisch davon, eingesetzt wird, so ist es bevorzugt, wenn das Substrat (2) ebenfalls durch Auftragen einer Zusammensetzung, mindestens ein latentes Alkylboran umfasst und im Wesentlichen frei von Dekomplexierungsmitteln für das latente Alkylboran ist, vorbehandelt wird, bevor das Substrat (2) mit dem Substrat (1), bzw. der darauf aufgebrachten radikalisch härtbaren Substanz, in Kontakt gebracht wird.

Im Zusammenhang mit der vorliegenden Erfindung handelt es sich bei der radikalisch härtbaren Substanz um eine Substanz, die ungesättigte Einheiten aufweist. Solche ungesättigten Einheiten können beispielsweise in Form von C=C-Doppelbindungen vorliegen.

Bei der radikalisch härtbaren Substanz handelt es sich vorzugsweise um einen Klebstoff, einen Lack, eine Beschichtung, ein Versiegelungsmaterial, einen Klebstoff oder eine Füllmasse. Diese kann auf allen denkbaren radikalisch härtbaren Substanzen beruhen. Es ist jedoch bevorzugt, wenn die radikalisch härtende Substanz C=C-Doppelbindungen aufweist.

In einer bevorzugten Ausführungsform handelt es sich bei der radikalisch härtbaren Substanz um eine auf (Meth)acrylaten beruhende Substanz, bevorzugt einen Acrylatklebstoff. Es hat sich gezeigt, dass kommerziell verfügbare Acrylatklebstoffe, wenn sie im vorstehend geschilderten Verfahren eingesetzt werden, eine gute Verbindung zum Substrat (1) gewährleisten. Im Gegensatz dazu wird bei Klebstoffen, deren Härtung nicht auf einem radikalischen Prozess beruht (wie beispielsweise Polyurethan- oder Epoxyklebstoffen), keine Verbesserung der Adhäsion durch das Vorbehandeln mit einer Zusammensetzung, umfassend mindestens ein latentes Alkylboran, beobachtet.

Es hat sich weiterhin gezeigt, dass bei Substraten, die keine ungesättigten Einheiten aufweisen, beispielsweise bei thermoplastischen Olefinen, feuerverzinktem Stahl, HDPE, oder Hartpolypropylen, keine Verbesserung der Adhäsion durch eine Vorbehandlung mit latenten Alkylboranen festzustellen ist. Dies erscheint mit Blick auf den vorbeschriebenen Stand der Technik überraschend, da Boraninitiierte 2-Komponenten-Acrylatklebstoffe beschrieben wurden, die eine gute Adhäsion u.a. auf Polyethylen und Polypropylen zeigen, auch wenn diese Substrate keiner Vorbehandlung unterzogen werden und der Boran-Komplex dem Klebstoff direkt zugemischt wurde (sh. z.B. US 6,383,655 B1 oder US 6,248,846 B1 oder US 5,718,977).

Ohne an eine bestimmte Theorie gebunden zu sein wird angenommen, dass durch das Auftragen des latenten Alkylborans auf das Substrat mit ungesättigten Einheiten dieses nach der Umwandlung des latenten Alkylborans zur aktiven Spezies mit dieser oder mit durch die aktive Spezies erzeugten Radikalen reagiert, und somit das Substrat in die Polymerisation der radikalisch härtbaren Substanz eingebunden wird.

Im Rahmen der vorliegenden Erfindung enthält die Zusammensetzung mindestens ein latentes Alkylboran. Dieses latente Alkylboran ist in der Lage, trivalente Alkylborane zu bilden.

Bevorzugte latente Alkylborane sind tetravalente Verbindungen, die vier Bindungen zum Bor aufweisen, von denen drei kovalent sind und eine in Form einer elektronischen Assoziation mit einem Elektronendonor, vorzugsweise einem Amin, vorliegt. Aus dem Komplex bildet sich eine freie Radikale generierende Spezies in Form eines trivalenten Alkylborans. Diese Reaktion wird begünstigt, wenn das latente Alkylboran mit einer weiteren Substanz in Kontakt kommt, die im Folgenden als Dekomplexierungsmittel oder Initiator bezeichnet wird. Die freie Radikale generierende Spezies erzeugt freie Radikale durch Reaktion mit Sauerstoff aus der Umgebung.

Bevorzugte latente Alkylborane sind Alkylborate (z.B. Alkylboratsalze) oder Alkylborankomplexe (beispielsweise Alkylboranaminkomplexe). Ein Alkylborat ist ein Salz eines positiven Kations und eines anionischen tetravalenten Bors. Jedes Alkylborat, das in ein Alkylboran bei Kontakt mit einem Dekomplexierungsmittel umgewandelt werden kann, kann im Rahmen der vorliegenden Erfindung eingesetzt werden. Eine Klasse bevorzugter Alkylborate (ebenfalls bekannt unter der Bezeichnung quartäre Borsalze) wird beispielsweise in Kneafsey et al., US 2003/0226472, und Kneafsey et al., US 2004/0068067, offenbart, die beide hiermit durch Bezugnahme eingeschlossen sein sollen.

In einer weiteren Ausführungsform ist das Alkylborat ein intern blockiertes Borat, wie es beispielsweise in Kendall et al., US 6,630,555, beschrieben wird, und welches hiermit durch Bezugnahme eingeschlossen ist. In diesem Dokument sind vierfach koordinierte intern blockierte Borate beschrieben, wobei das Bor-Atom Teil einer Ringstruktur ist, die weiterhin Oxa- und Thio-Funktionalitäten aufweist. Der Begriff *"intern blockiert"* bezeichnet im Zusammenhang mit Alkylboraten, wie sie hier beschrieben sind, eine vierfach koordinierte Bor-Spezies, die Teil einer internen Ringstruktur, die zwei der vier Borkoordinationsstellen umfasst, ist. Die interne Blockierung schließt eine Struktur mit einem oder mehreren Ringen ein, wobei das Bor-Atom Teil von Strukturen mit einem oder mehreren Ringen ist.

Besonders bevorzugte Borate sind im Rahmen der vorliegenden Erfindung die Alkalimetallsalze, insbesondere die Kaliumsalze, von Tri-N-butylbortertbutylat, Tri-sec-butylbortertbutylat sowie von Diethylisopropyloxybortertbutylat. Ein weiteres bevorzugtes Borat ist das Lithium Tri-sec-butylborhydrid, das beispielsweise unter dem Handelsnamen Calselect® LI von BASF erhältlich ist.

Weitere im Rahmen der vorliegenden Erfindung zweckmäßig einzusetzende latente Alkylborane sind Dialkylbor-Verbindungen, wie beispielsweise das Diethylmethoxyboran, das Diethylisopropyloxyboran, der Methylaminoethanolkomplex des Diethylisopropyloxyborans sowie das Methylaminoethoxydicyclohexylboran.

In einer bevorzugten Ausführungsform liegt das latente Alkylboran in Form eines Alkylboranaminkomplexes vor. In diesem Fall ist die freie Radikale generierende Spezies ein Trialkylboran oder ein Alkylcycloalkylboran (d.h. der Alkyloboranaminkomplex kann ein Trialkylboran oder ein Alkylcycloalkylboran enthalten). Bevorzugte derartige Borane entsprechen der Formel B-$(R^1)_3$, wobei B für Bor steht und $R^1$ unabhängig voneinander eine $C_1$-$C_{10}$-Alkylgruppe oder eine $C_3$-$C_{11}$-Cycloalkylgruppe sein kann oder zwei oder mehrere von $R^1$ in Form eines cycloaliphatischen Rings vorliegen können. Vorzugsweise ist $R^1$ eine $C_1$-$C_6$-Alkylgruppe, besonders bevorzugt eine $C_1$-$C_4$-Alkylgruppe und am meisten bevorzugt eine $C_1$-$C_3$-Alkylgruppe. Unter den bevorzugten Alkylboranen sind Triethylboran, Triisopropylboran und Tri-N-butylboran. Wenn das latente Alkylboran als Alkylboranaminkomplex vorliegt, ist das Alkylboran ein trivalentes Alkylboran, während das Amin jedes Amin sein kann, das reversibel mit dem Boran einen Komplex bildet.

Im Rahmen dieser Erfindung verwendbare Alkylboranaminkomplexe weisen die allgemeine Formel $B(-R^1)_3AM$ auf, wobei $R^1$ unabhängig voneinander eine $C_1$-$C_{10}$-Alkyl- oder $C_3$-$C_{10}$-Cycloalkylgruppe sein kann, oder wobei mehrere $R^1$ einen cycloaliphatischen Ring bilden können. Vorzugsweise ist $R^1$ eine $C_{1-6}$-Alkylgruppe, besonders bevorzugt $C_1$-$C_4$-Alkylgruppe, und am meisten bevorzugt $C_1$-$C_3$-Alkylgruppe. Besonders bevorzugte Alkylborane sind beispielsweise das Triethylboran, das Triisopropylboran und das Tri-n-butylboran. AM steht für einen AminRest.

Das Amin, das gemäß der vorliegenden Erfindung im Alkylboranaminkomplex gebunden ist, kann jedes Amin oder jede Mischung von Aminen sein, die mit dem Alkylboran einen Komplex bilden, wobei der Komplex gespalten werden kann. Diese Spaltung kann spontan ablaufen, sie kann jedoch auch durch Zugabe eines Dekomplexierungsmittels oder durch erhöhte Temperaturen beschleunigt werden. Die Attraktivität der Verwendung eines bestimmten Amins in einem Alkylboranaminkomplex kann aus der Energiedifferenz zwischen dem Lewis-Säure-Base-Komplex und der Summe der Energien der isolierten Lewis-Säuren (Alkylboran) und Basen (Amin), bekannt als Bindungsenergie, berechnet werden, wie dies beispielsweise in Jialanella et al., US 7, 247,596, Sp. 5, Z. 60 bis Sp. 6, Z. 28, offenbart ist.

$$\text{Bindungsenergie} = -\,[\text{Komplexenergie} - (\text{Energie der Lewis-Säure} + \text{Energie der Lewis-Base})]$$

Bevorzugte Amine beinhalten Ammoniak, primäre oder sekundäre Amine, oder Polyamine, die primäre oder sekundäre Amingruppen enthalten, wie sie in US 5,539,070 in Sp. 5, Z. 41 bis 53, US 5,106,928 in Sp. 2, Z. 29 bis 58 oder in US 5,686,544 in Sp. 7, Z. 29 bis Sp. 10, Z. 36 beschrieben sind. Diese beinhalten Ethanolamin, sekundäre Dialkyldiamine oder Polyoxyalkylenpolyamine, Aminterminierte Reaktionsprodukte von Diaminen und Verbindungen, die ein oder mehrere mit Aminen reaktive Gruppen aufweisen. Solche Verbindungen sind beispielsweise in der US 5,883,208 in Sp. 7, Z. 30 bis Sp. 8, Z. 56 offenbart. Mit Blick auf die in der US 5,883,208 offenbarten Reaktionsprodukte umfassen diese bevorzugt diprimären Amine wie Alkyl-diprimäre Amine, Aryl-diprimäre Amine, Alkylaryl-diprimäre Amine und Polyoxyalkylen-Diamine. Besonders bevorzugte Amine umfassen N-Octylamin, 1,6-Diaminohexan (1,6-Hexandiamin), Diethylamin, Dibutylamin, Diethylentriamin, Dipropylentriamin, 1,3-Propylendiamin (1,3-Propandiamin), 1,2-Propylendiamin, 1,2-Ethandiamin, 1,5-Pentandiamin, 1,12-Dodekandiamin, 2-Methyl-1,5-Pentandiamin, 3-Methyl-1,5-Pentandiamin, Triethylentetraamin und Diethylentriamin. Bevorzugte Polyoxyalkylenpolyamine umfassen Polyethylenoxiddiamin, Polypropylenoxiddiamin, Triethylenglycolpropylendiamin, Polytetramethylenoxiddiamin und Polyethylenoxidcopolypropylenoxiddiamin.

Das Amin im Organoboranaminkomplex liegt vorzugsweise in Form eines Alkyldiamins mit mindestens einer primären Aminogruppe vor, wobei es besonders bevorzugt ist, wenn die Alkylgruppe 2 bis 6 Kohlenstoffe, insbesondere 2 bis 4 Kohlenstoffe, enthält.

In einer besonders bevorzugten Ausführungsform umfasst der Alkylboranaminkomplex ein Trialkylboran oder ein Alkylcycloalkylboran und das Amin umfasst ein primäres Amin, ein sekundäres Amin, ein Polyamin mit primären oder sekundären Aminogruppen oder beidem, Ammoniak, ein Polyoxyalkylenamin, das Reaktionsprodukt eines Diamins und einer difunktionellen Verbindung, die Gruppen aufweist, die mit Aminen reagieren, wobei das Reaktionsprodukt terminale Amingruppen aufweist, ein Arylamin, ein heterocyclisches Amin, eine Verbindung, die eine strukturelle Amideinheit aufweist, einem aliphatischen Heterocyclus, der mindestens ein sekundäres Stickstoffatom im heterocyclischen Ring aufweist, wobei der Heterocyclus ein oder mehrere sekundäre oder tertiäre Stickstoffatome, Sauerstoffatome, Schwefelatome oder Doppelbindungen im Heterozyklus enthalten kann; alicyclische Verbindungen, die, gebunden an den alicyclischen Ring, einen oder mehrere Substituenten aufweisen, die eine Amingruppe enthalten, konjugierte Imine

oder Gemische davon.

Im Rahmen dieser Erfindung ganz besonders bevorzugte Alkylboranaminkomplexe sind der Triethylborandiaminopropankomplex, der Triethylborandiethylentriaminkomplex, der Tri-n-butylboranmethoxypropylaminkomplex, der Tri-n-butylborandiaminopropylaminkomplex, der Tri-*sec*-butyl-borandiaminopropankomplex, der Methylaminoethoxydiethylborankomplex und der Methylaminoethoxydicyclohexylborankomplex.

Im Rahmen der vorliegenden Erfindung ist es bevorzugt, wenn die Zusammensetzung, umfassend das mindestens eine latente Alkylboran, einen pH-Wert von etwa 7 oder mehr, vorzugsweise einen pH-Wert von 7 bis 12, und insbesondere bevorzugt einen pH-Wert von 7 bis 10, aufweist.

Es ist zweckmäßig, wenn die Zusammensetzung, umfassend mindestens ein latentes Alkylboran, zusätzlich ein Lösungsmittel enthält, wobei dieses Lösungsmittel eine ausreichende Löslichkeit für das latente Alkylboran aufweisen muss, so dass dieser in dem Lösungsmittel in Lösung vorliegt. Besonders geeignete Lösungsmittel in Kombination mit latenten Alkylboranen gemäß der vorliegenden Erfindung sind u.a. Hexan, Heptan, Xylol, Ethylacetat oder Gemische davon.

Hinsichtlich der Konzentration des latenten Alkylborans in der Zusammensetzung unterliegt die vorliegende Erfindung keinen relevanten Beschränkungen. Es ist allein erforderlich, dass das latente Alkylboran in der Zusammensetzung mit einem Gehalt vorliegt, der eine merkliche Verbesserung der Verbindung des Substrats mit der radikalisch härtbaren Substanz bewirkt. Vorzugsweise liegt das latente Alkylboran in der Zusammensetzung mit einem Gehalt von etwa 0,05 bis 50 Gew.-%, insbesondere 1 Gew.-% bis 40 Gew.-%, besonders bevorzugt von etwa 2,5 bis 30 Gew.-%, und noch mehr bevorzugt von 2,5 bis 20 Gew.-%, und am meisten bevorzugt 5 bis 10 Gew.-% vor. Es hat sich gezeigt, dass bereits bei einer Menge von 2,5 Gew.-% an latenten Alkylboranen eine deutliche Verbesserung der Torsionsfestigkeit in MPa erzielt wird, während bei Mengen von 15 bis 30 Gew.-% die Ergebnisse nur unwesentlich besser sind als bei geringeren Konzentrationen des latenten Alkylborans.

Weiterhin hat sich gezeigt, dass der Zusatz eines radikalisch härtbaren Monomers zu dem latenten Alkylboran die Haftung zu dem Substrat weiter verbessern kann. Geeignete radikalisch härtbare Monomere sind in diesem Zusammenhang insbesondere (Meth)acrylate wie sie im Nachstehenden für die radikalisch härtbare Substanz beschrieben werden. Erforderlich ist es für diese (Meth)acrylate allein, dass sie keine dekomplexierenden Eigenschaften aufweisen, d.h. unter anderemkeine Carboxylgruppen aufweisen, vorzugsweise flüssig sind und sich gut in dem Lösungsmittel für das latente Alkylboran lösen lassen. Besonders bevorzugte (Meth)acrylate sind beispielsweise Methacrylate wie Tetrahydrofurfurylmethacrylat und Amino-Methacrylate wie Dimethylaminoethylmethacrylat. Ebenso können Mischungen der genannten (Meth)acrylate verwendet werden.

Das Mengenverhältnis der zusätzlichen radikalisch härtbaren Monomere zu dem latenten Alkylboran (bezogen jeweils auf deren Gewicht) ist nicht entscheidend, liegt aber vorzugsweise im Bereich von 100:1 bis 1:5, insbesondere 10:1 bis 1:5, weiter bevorzugt 5:1 bis 1:5, noch mehr bevorzugt 3:1 zu 1:3 und am meisten bevorzugt zwischen 2:1 und 1:2. Bezogen auf die Menge des radikalisch härtbaren Monomers in der das latente Alkylboran enthaltenden Zusammensetzung ist es weiterhin bevorzugt, wenn die Gesamtmenge an radikalisch härtbaren Monomeren in der Zusammensetzung nicht mehr als 30 Gew.-%, insbesondere nicht mehr als 20 Gew.-% und besonders bevorzugt nicht mehr als 15 Gew.-% beträgt.

Im Rahmen der vorliegenden Erfindung hat es sich in Einzelfällen gezeigt, dass der Zusatz von Aminen zu dem latenten Alkylboran mit besonderen Vorteilen verbunden sein kann, insbesondere, wenn diese Amine die Aushärtung der radikalisch härtbaren Substanz begünstigen. So kann ein zusätzliches Amin beispielsweise mit einem in der radikalisch härtbaren Zusammensetzung verwendeten Peroxid oder Hydroperoxid reagieren und so die Aushärtung der radikalisch härtbaren Zusammensetzung beschleunigen. Geeignete Amine in diesem Zusammenhang sind beispielsweise aromatisch Anilin-Derivate, wie insbesondere N,N-Diethylanilin, hydroxyethylierte Aniline, wie N,N-bis-(2-hydroxyethyl)-p-Toluidin (Bisomer PTE) und halogenierte Derivate davon. Besonders geeignete Amine für die Verwendung mit Hydroperoxiden sind Amin-Aldehyd-Kondensationsprodukte wie z.B. 3,5-Diethyl-1,2-dihydro-1-phenyl-2-propylpyridin (DHP). Der Zusatz entsprechender Amine zu dem latenten Alkylboran kann daher die Haftung auf elastischen Substraten, wie EPDM, SBR und NBR verbessern.

Wie vorstehend bereits erläutert, kann das latente Alklyboran durch ein Dekomplexierungsmittel aktiviert werden. Das Dekomplexierungsmittel kann in der Zusammensetzung, umfassend das mindestens eine latente Alkylboran, in einer separat aufzubringenden Zusammensetzung oder in der radikalisch härtbaren Substanz enthalten sein. Vorzugsweise ist das Dekomplexierungsmittel jedoch nicht in der Zusammensetzung, umfassend das mindestens eine latente Alkylboran enthalten, da dies zu einer vorzeitigen Aktivierung des latenten Alkylborans führen kann und dieses somit ganz oder teilweise abgebaut werden würde. Daher sollte, falls das Dekomplexierungsmittel zusammen mit dem latenten Alkylboran aufgebracht wird, dieses erst kurz vor dem Aufbringen mit dem latenten Alkylboran vermischt werden. Es ist jedoch bevorzugt, wenn sich das Dekomplexierungsmittel in der radikalisch härtbaren Zusammensetzung befindet, da dann eine Aktivierung des latenten Alkylborans erst bei dem Kontakt mit der radikalisch härtbaren Zusammensetzung erfolgt. Es ist jedoch auch möglich, das Dekomplexierungsmittel als separate Komponente nach der Applikation des latenten Alkylborans auf die daraus resultierende Schicht aufzutragen, was eine zweite Vorbehandlung darstellt.

Es kann notwendig sein, die Aufspaltung des latenten Alkylborans zu erleichtern, indem die Zusammensetzung, umfassend das latente Alkylboran oder das Substrat, auf das diese aufgetragen wurde, auf eine gewisse Temperatur erhitzt wird.

Das Dekomplexierungsmittel umfasst oder besteht im Wesentlichen aus Mineralsäuren, organischen Säuren, Lewis-Säuren, Isocyanaten, Säurechloriden, Sulphonylchloriden, Aldehyden oder einer Kombination davon. Als Dekomplexierungsmittel geeignete organische Säuren sind beispielsweise Säuren gemäß der allgemeinen Formel R-COOH, wobei R Wasserstoff, eine Alkylgruppe mit 1 bis 20, vorzugsweise 1 bis 11, und besonders bevorzugt 1 bis 4 Kohlenstoffatomen oder eine Arylgruppe mit 6 bis 10, vorzugsweise 6 bis 8 Kohlenstoffatomen sein kann. Geeignet sind ebenfalls di-funktionelle Säuren, beispielsweise Maleinsäure oder Itaconsäure. Die Alkylgruppe kann ein geradkettiges oder verzweigtes Alkyl sein. Sie kann ungesättigt oder gesättigt sein. Beispielhafte Säuren umfassen Acrylsäure, Methacrylsäure, Essigsäure, Benzoesäure und p-Methoxybenzoesäure. Geeignete Lewis-Säuren sind beispielsweise $SnCl_4$, $TiCl_4$ und Ähnliche. Geeignete Mineralsäuren sind beispielsweise HCl, $H_2SO_4$, $H_3PO_4$ und Ähnliche. Weitere geeignete Dekomplexierungsmittel sind copolymerisierbare Dekomplexierungsmittel, wie beispielsweise Zink-Di(Meth)acrylat (beispielsweise erhältlich unter den Handelsnamen Dymalink 705 und Dymalink 708), Calcium-Di(Meth)acrylat, oder Hydroxyethyl(meth)acrylat-Phosphat (beispielsweise erhältlich unter den Handelsnamen Sartomer SR9051, 9050 oder 9054).

Im Rahmen der vorliegenden Erfindung hat sich die Verwendung von bifunktionellen Dekomplexierungsmitteln als besonders zweckmäßig erwiesen, die sowohl eine ungesättigte Einheit als auch eine Säurefunktion aufweisen. Über die Säurefunktion wirken solche Verbindungen als Dekomplexierungsmittel für das latente Alkylboran, während die ungesättigte Einheit ein Einbinden des Dekomplexierungsmittels in die radikalisch härtbare Substanz ermöglicht. Dadurch kann ein Austritt des Dekoplexierungsmittels über die Zeit aus der gehärteten Substanz unterbunden werden. Besonders geeignete Dekomplexierungsmitel sind in diesem Zusammenhang ungesättigte Carbonsäuren wie Acryl- oder Methacrylsäure, Itaconsäure oder Monoaddukte von hydroxyfunktionellen (Meth)acrylaten wie Hydroxyethylmethacrylat und Dicarbonsäuren oder deren Anhydriden wie z.B. Bernsteinsäureanhydrid.

Das Dekomplexierungsmittel kann in einer Konzentration vorliegen, die hoch genug ist damit zumindest ein Teil des in der Zusammensetzung enthaltenen latenten Alkylborans mit dem Dekomplexierungsmittel reagieren kann. Bevorzugt wird es in einer Menge zugesetzt, die mindestens etwa 20 mol.-%, besonders bevorzugt mindestens etwa 50 mol.-%, insbesondere mindestens etwa 80 mol.-%, und am meisten bevorzugt mindestens etwa 100 mol.-%, bezogen auf die molare Menge der organischen Borverbindung entspricht. Für im Rahmen einer Weiterverarbeitung aufzubringende Klebstoffe, die ihrerseits latente Alkylborane und Dekomplexierungsmittel enthalten, ist hierbei zu berücksichtigen, dass die Menge des im Klebstoff enthaltenen Dekomplexierungsmittels in der Regel auf die Menge des enthaltenen latenten Alkylborans abgestimmt ist. Dies hat zur Folge, das für eine Reaktion mit dem auf das Substrat aufgebrachten latenten Alkylboran keine ausreichende Menge an Dekomplexierungsmittel zur Verfügung steht, zumal latentes Alkyboran und Dekomplexierungsmittel schon vor dem Auftragen des Klebstoffs auf das Substrat miteinander vermischt werden und reagieren können. Für die Berechnung der vorstehenden Mol-% Angaben ist daher zunächst die Molmenge des im Klebstoff enthaltenen latentes Alkyborans von der Molmenge des Dekomplexierungsmittel abzuziehen, und die Dekomplexierungsmittelmenge anhand des auf das Substrat aufgebrachten latenten Alkylborans und diesem korrigierten Dekomplexierungsmittelgehalt zu berechnen.

Das Dekomplexierungsmittel kann beispielsweise in einer Konzentration von mehr als 0,05 Gew.-%, vorzugsweise mehr als 0,5 Gew.-%, besonders bevorzugt mehr als etwa 1 Gew.-%, und am meisten bevorzugt mehr als etwa 2 Gew.-%, bezogen auf das Gesamtgewicht der Zusammensetzung, vorliegen. Das Dekomplexierungsmittel kann andererseits in einer Konzentration von weniger als etwa 15 Gew.-%, vorzugsweise weniger als etwa 10 Gew.-%, weiter bevorzugt weniger als etwa 7 Gew.-%, und am meisten bevorzugt weniger als etwa 6 Gew.-%, basierend auf dem Gesamtgewicht der Zusammensetzung, vorliegen. Ebenso ist es möglich, Gemische von mehreren Dekomplexierungsmitteln einzusetzen, wobei das Gesamtgewicht aller Dekomplexierungsmittel in den vorstehend bezeichneten Bereichen liegt.

Hinsichtlich der radikalisch härtbaren Substanz unterliegt die vorliegende Erfindung ebenfalls keinen relevanten Beschränkungen. Wie vorstehend bereits erläutert, ist es jedoch bevorzugt, wenn die radikalisch härtbare Substanz auf Acrylaten oder Methacrylaten beruht. Bevorzugte Beispiele von Acrylaten und Methacrylaten umfassen Methyl(meth)acrylat, Butyl(meth)acrylat, tert-Butyl(meth)-acrylat, 2-Ethylhexyl(meth)acrylat, Ethyl(meth)acrylat, Isobornyl(meth)acrylat, Cyclohexyl(meth)acrylat, Trimethylcyclohexyl(meth)acrylat, Lauryl(meth)acrylat, Hydroxyethyl(meth)acrylat, Glycidyl(meth)acrylat, Tetrahydrofurfuryl(meth)-acrylat, Alkoxytetrahydrofurfuryl(meth)acrylat (z.B. ethoxyliertes oder propoxyliertes Tetrahydrofurfuryl(meth)acrylat), Acrylamid, N-Methylacrylamid u.a. ähnliche Acrylat enthaltende Monomere. Die Zusammensetzung umfasst vorzugsweise ein, zwei oder mehrere der vorgenannten (Meth)acrylate.

Neben den vorhergehend beschriebenen (Meth)acrylatmonomeren kann die Zusammensetzung weitere radikalisch polymerisierbare Bestandteile aufweisen. Beispielsweise sind dies vernetzende Monomere wie Allyl(meth)acrylat oder vernetzende difunktionelle oder höher funktionelle (Meth)acrylate wie oligomere oder polymere Verbindungen der

Formel (I).

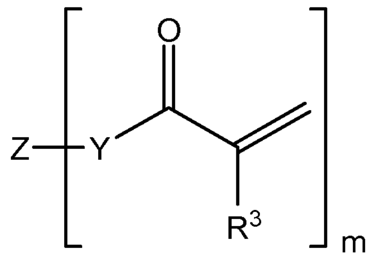

(I)

Der Rest $R^3$ steht dabei für ein Wasserstoffatom oder für eine Methylgruppe. Der Index m steht für einen Wert von 2 bis 5. Weiterhin steht Z für ein Polyol nach Entfernung von m Hydroxylgruppen und Y steht für O oder für NR', wobei R' für einen Kohlenwasserstoffrest oder für ein Wasserstoffatom, bevorzugt für ein Wasserstoffatom, steht.

Die Verbindung der Formel (I) ist insbesondere ausgewählt aus der Gruppe bestehend aus Ethylenglykoldi(meth)acrylat, 1,3- und 1,4-Butandioldi(meth)acrylat, 1,6-Hexandioldi(meth)acrylat, ethoxyliertem und propoxyliertem Neopentylglykoldi(meth)acrylat, propoxyliertem Glyceryltri(meth)acrylat, Trimethylolpropantri(meth)acrylat, Trimethylolpropandi(meth)acrylat, ethoxyliertem Trimethylolpropantri(meth)acrylat, modifiziertem Pentaerythritoltri(meth)acrylat, propoxyliertem ethoxyliertem Pentaerythritoltetra(meth)acrylat, Ditrimethylolpropantetra(meth)acrylat und Dipentaerythritolpenta(meth)acrylat. Insbesondere steht m in der Verbindung der Formel (I) für einen Wert von 2 und Z steht für ein polymeres Polyol nach Entfernung von zwei OH-Gruppen. Dieses polymere Polyol ist dabei insbesondere ein Polyalkylenpolyol, ein Polyoxyalkylenpolyol oder ein Polyurethanpolyol; ein polyhydroxyfunktionelles Ethylen-Propylen-Dien-, Ethylen-Butylen-Dien- oder Ethylen-Propylen-Dien-Copolymer; ein polyhydroxyfunktionelles Copolymer aus Dienen wie 1,3-Butandien oder Diengemischen und Vinylmonomeren wie Styrol, Acrylnitril oder Isobutylen; ein polyhydroxyfunktionelles Polybutadienpolyol; ein polyhydroxyfunktionelles Acrylonitril/Butadien-Copolymer; oder ein Polysiloxanpolyol.

Beispielsweise sind derartige di- oder trifunktionelle (Meth)acrylate ausgewählt aus der Gruppe bestehend aus Polyethylenglykoldi(meth)acrylat wie Diethylenglykoldi(meth)acrylat, Triethylenglykoldi(meth)acrylat, Tetraethylenglykoldi(meth)acrylat; Polypropylenglykoldi(meth)acrylat wie Dipropylenglykoldi(meth)acrylat, Tripropylenglykoldi(meth)acrylat; und Tris-(2-hydroxyethyl)-isocyanurattri(meth)acrylat.

Weiterhin geeignet ist Z ein Diphenol, insbesondere ein alkoxyliertes Diphenol, nach Entfernung von zwei OH-Gruppen, bevorzugt ethoxyliertes Bisphenol A. Beispielsweise ist ein derartiges difunktionelles (Meth)acrylat unter dem Handelsnamen Sartomer® SR 348 kommerziell erhältlich von der Firma Sartomer Company, Inc., USA.

Als weitere Bestandteile der radikalisch härtbaren Substanz geeignet sind beispielsweise auch difunktionelle (Meth)acrylate wie Epoxy(meth)acrylate, insbesondere Epoxy(meth)acrylate, welche aus der Umsetzung von Bisphenol-A-diglycidylether mit (Meth)acrylsäure erhältlich sind. Beispielsweise ist ein derartiges difunktionelles (Meth)acrylat unter dem Handelsnamen Sartomer® CN 104 kommerziell erhältlich von der Firma Sartomer Company, Inc., USA.

Ebenfalls verwendbar ist die Klasse der Vinyl-funktionalisierten Prepolymere. Dabei handelt es sich um Prepolymere, die terminal mit Vinylgruppen beispielsweise in Form von (Meth)acrylatgruppen funktionalisiert sind. Geeignete Vinyl-funktionalisierte Prepolymere basieren beispielsweise auf polyhydroxyterminierten Acrylnitril/Butadien-Copolymeren und werden typischerweise aus carboxylterminierten Acrylnitril/Butadien-Copolymeren, welche beispielsweise unter dem Namen Hypro® CTBN von Emerald Performance Materials, LLC, USA, kommerziell erhältlich sind, und Epoxiden oder Aminoalkoholen hergestellt.

Derartige geeignete Vinyl-funktionalisierte Prepolymere der Formel (I) sind beispielsweise kommerziell erhältlich von der Firma Kraton Polymers, USA, oder unter den Handelsnamen Hypro® VTB und Hypro® VTBNX von der Firma Emerald Performance Materials, LLC, USA. Ein weiteres Beispiel für Vinyl-funktionalisierte Prepolymere sind Acrylat-gecappte Polybutadienpremolymere (beispielsweise Oligomere), die kommerziell beispielsweise von Emerald Performance Materials unter dem Handelsnamen Hypro erhältlich. Eine solche bevorzugte Verbindung ist Hypro™ VTB 2000X168.

Beim Vinyl-funktionalisierten Prepolymer kann es sich ebenso um ein Polyurethan(meth)acrylat handeln. Derartige Verbindungen sind typischerweise, in einer dem Fachmann bekannten Art und Weise, herstellbar aus der Reaktion von mindestens einem Polyisocyanat, insbesondere einem Diisocyanat, und einer (Meth)acrylsäure, einem (Meth)acrylamid oder einem (Meth)acrylsäureester, welcher eine Hydroxylgruppe aufweist. Gegebenenfalls kann das Diisocyanat vor der Umsetzung mit (Meth)acrylsäure, einem (Meth)acrylamid oder einem (Meth)-acrylsäureester, welcher eine Hydroxylgruppe aufweist, mit mindestens einem Polyol, insbesondere einem Diol, in einem dem Fachmann bekannten Verfahren zu einem Isocyanatgruppen aufweisenden Polyurethanpolymer umgesetzt werden. Zur Umsetzung mit den Isocyanatgruppen des Polyisocyanats eignen sich insbesondere Hydroxyalkyl(meth)acrylate wie Hydroxypropylacrylat

(HPA), Hydroxypropylmethacrylat (HPMA), Hydroxybutylacrylat (HBA) oder Hydroxybutylmethacrylat (HBMA), bevorzugt Hydroxyethylacrylat (HEA) oder Hydroxyethylmethacrylat (HEMA), oder ein Monohydroxypoly(meth)acrylat eines Polyols, bevorzugt von Glycerin oder Trimethylolpropan.

Polyurethan(meth)acrylate können ebenfalls hergestellt werden durch Veresterung eines Hydroxylgruppen aufweisenden Polyurethanpolymers mit (Meth)acrylsäure.

Weiterhin können Polyurethan(meth)acrylate hergestellt werden durch die Umsetzung eines (Meth)acrylsäureesters, welches mindestens eine Isocyanatgruppe aufweist, mit einem Hydroxylgruppen aufweisenden Polyurethanpolymer oder mit einem Polyol, wie sie beispielsweise im vorliegenden Dokument beschrieben sind. Als (Meth)acrylsäureester, welches mindestens eine Isocyanatgruppe aufweist, eignet sich beispielsweise 2-Isocyanatoethylmethacrylat.

Als Polyisocyanate eignen sich handelsübliche Polyisocyanate, insbesondere Diisocyanate. Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (mund p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.

Geeignete Polyole sind insbesondere Polyetherpolyole, Polyesterpolyole und Polycarbonatpolyole sowie Mischungen dieser Polyole. Beispielsweise sind geeignete Polyole aufgelistet als Polyole **P** in der europäischen Patentanmeldung EP 08169631.2, deren gesamte Offenbarung hiermit durch Bezugnahme eingeschlossen wird.

Bevorzugt ist das Polyol ein Diol, insbesondere Polyoxypropylendiol oder Polyoxybutylendiol. Am Meisten bevorzugt handelt es sich bei den Polyolen um möglichst unpolare Polyole.

Ein bevorzugtes Acrylat-gecapptes Polyurethanprepolymer ist CN 973J75 von Sartomer Company, Inc.

Weitere im Rahmen der vorliegenden Erfindung verwendbare Prepolymere sind solche, die aus Polyolen, wie beispielsweise Polypropylenglycol, Polyethylenglycol oder Polytetrahydrofuran hergestellt werden. Es ist auch möglich, Mischungen von verschiedenen Polyolen als Basis der Acrylat-gecappten Prepolymere wie beispielsweise eine Mischung aus Polypropylenglycol und Polytetrahydrofuran oder aus Polytetrahydrofuran und Polyestern zu verwenden.

Bevorzugt handelt es sich beim Vinyl-funktionalisierten Prepolymer um ein Elastomer, insbesondere um ein Polyurethan(meth)acrylat und/oder ein vinylterminiertes Acrylonitril/Butadien-Copolymer.

Die radikalisch härtbare Substanz kann aus einer der vorgenannten Komponenten bestehen. Vorzugsweise umfasst die radikalisch härtbare Substanz jedoch eine Kombination von zwei, drei oder mehreren Komponenten, die mit Hilfe einer radikalischen Polymerisation gehärtet werden können. Ohne an eine bestimmte Theorie gebunden zu sein, liefert die Verwendung von mehreren Acrylaten oder Methacrylaten Zusammensetzungen, die eine oder mehrere unterschiedliche vorteilhafte Eigenschaften aufweisen, wie beispielsweise unterschiedliche Benetzungs-Eigenschaften, unterschiedliche Oberflächenenergien, unterschiedliche Reaktivitäten, unterschiedliche Klebstoffeigenschaften oder unterschiedliche Brucheigenschaften.

Es kann auch sinnvoll sein zusätzlich zu Acrylaten und/oder Methacrylaten weitere radikalisch härtbare Komponenten in die radikalisch härtbare Substanz einzubeziehen, die nicht auf Acrylaten oder Methacrylaten beruhen. Solche zusätzlichen Komponenten können allgemein in Form von Monomeren, Oligomeren oder als Prepolymere zugesetzt werden. Solche Komponenten sind beispielsweise Styrol und alkylierte Styrol-Typen (z.B. Methylstyrol), Allyl-Verbindungen, VinylVerbindungen, Methallyl-Verbindungen, etc. Es ist jedoch bevorzugt, wenn die Menge solcher zusätzlicher Monomeren in der Substanz, wenn diese im wesentlichen Acrylate oder Methacrylate enthält, weniger als etwa 40 %, insbesondere weniger als etwa 30%, besonders bevorzugt weniger als etwa 20 % und am meisten bevorzugt weniger als etwa 10 %, bezogen auf das Gesamtgewicht der radikalisch härtbaren Monomere in der radikalisch härtbaren Substanz, beträgt.

Die Menge von radikalisch härtbaren Bestandteilen, d.h von Monomeren und gegebenenfalls Oligomeren und/oder Prepolymeren, in der radikalisch härtbaren Substanz, beträgt vorzugsweise etwa 10 Gew.-% oder mehr, besonders bevorzugt etwa 15 Gew.-% oder mehr, noch mehr bevorzugt etwa 20 Gew.-% oder mehr, und am meisten bevorzugt etwa 30 Gew.-% oder mehr auf Basis des Gesamtgewichts der radikalisch härtbaren Substanz. Der Gehalt von Verbindungen, die durch freie radikalische Polymerisation polymerisiert werden können, beträgt vorzugsweise etwa 90 Gew.-% oder weniger, basierend auf der gesamten radikalisch härtbaren Substanz, besonders bevorzugt etwa 85 Gew.-% oder weniger, und am meisten bevorzugt etwa 80 Gew.-% oder weniger.

In einem Beispiel, das jedoch nicht beschränkend für die vorliegende Erfindung sein soll, kann die radikalisch härtbare Substanz ein, zwei, drei oder vier Verbindungen, ausgewählt aus der Gruppe, bestehend aus Methyl(meth)acrylat, Tetrahydrofurfuryl(meth)acrylat, Lauryl(meth)acrylat, einem Acrylat oder Methacrylat, das einen Epoxidring aufweist, und einem Acrylat- oder Methacrylat-gecappten Alkandien (beispielsweise Butadien) Prepolymer enthalten.

Die radikalisch härtbare Substanz kann ebenso einen oder mehrere Füllstoffe enthalten. In einer zweikomponentigen polymerisierbaren Zusammensetzung kann der Füllstoff in der ersten Komponente oder in der zweiten Komponente oder in beiden Komponenten enthalten sein. Es wurde beobachtet, dass Zusammensetzungen, die mehrere Füllstoffe enthalten, überraschend gute Klebefähigkeit zu den Substraten aufweisen.

Die Füllstoffe, die in der polymerisierbaren Zusammensetzung eingesetzt werden können, beinhalten Talk, Mika, Wollastonit, Calciumcarbonat, Bariumsulfat, Magnesiumcarbonat, Ton, Aluminiumdioxid, Siliziumdioxid, gebranntes Silica, Calciumsulfate, Kohlenstofffasern, Glasfasern, Metallfasern, Siliziumoxidsand, Aktivkohle, Titandioxid, Magnesiumhydroxid, Zeolith, Molybdän, Kieselgur, Sericit, weißen Sand, Calciumhydroxid, Calciumsulfit, Natriumsulfat, Bentonit, Graphit, Glaspartikel, Glasperlen, Nanopartikel aus Ton, Kaolinit, Illit, Smektit, Sepiolit, Vermitikulit, Pyrophylit, Sauconit, Saponit, Nontronit, Montmorillonit, Magnesiumaluminiumsilikat, Metallcarbonate, Feldspat, Mika, Quartz und Mischungen davon enthalten. Geeignete Füllstoffe können behandelt oder unbehandelt sein. Beispielhafte Füllstoffe beinhalten ohne Beschränkung Talk, Calciumcarbonat, gebranntes Silica, Ton oder eine Kombination davon. Mehrere dieser Füllstoffe können verwendet werden. Zum Beispiel kann die polymerisierbare Zusammensetzung gebranntes Silica und ein behandeltes (oder unbehandeltes) Calciumcarbonat enthalten.

Zusätzlich ist es möglich, organische Füllstoffe in die polymerisierbare Zusammensetzung einzubeziehen. Geeignete organische Füllstoffe sind beispielsweise solche, die elastomere oder schlagzähigkeitsverbessernde Eigenschaften aufweisen. Beispiele für solche Füllstoffe sind core-shell-Polymere, wie z.B. MBS oder AIM Typen, die beispielsweise unter den Handelsnamen Durastrength® oder Clearstrength® von Arkema, unter dem Handelsnamen Paraloid® von Dow Chemical, oder Blendex® von KaneAce erhältlich sind. Weitere verwendbare organische Füllstoffe sind Elastomere, beruhend auf SBS-Blockcopolymeren und Ähnlichem (beispielsweise erhältlich unter dem Handelsnamen Kraton), sowie chlorsulfonierte Polyethylene, die beispielsweise unter dem Handelsnamen Hypalon oder Tosoh CSM erhältlich sind.

Der Füllstoff kann in einer Konzentration von etwa 0 Gew.-% oder mehr, vorzugsweise etwa 5 Gew.-% oder mehr, und besonders bevorzugt etwa 10 Gew.-% oder mehr, basierend auf dem Gesamtgewicht der radikalisch härtbaren Substanz, eingesetzt werden. Der Füllstoff kann in einer Konzentration von etwa 50 Gew.-% oder weniger, vorzugsweise etwa 40 Gew.-% oder weniger, besonders bevorzugt etwa 30 Gew.-% oder weniger, und am meisten bevorzugt etwa 25 Gew.-% oder weniger, basierend auf dem Gesamtgewicht der polymerisierbaren Zusammensetzung, eingesetzt werden. Beispielsweise kann der Füllstoff in einer Konzentration von etwa 0 Gew.-% bis 50 Gew.-%, vorzugsweise von etwa 5 Gew.-% bis etwa 40 Gew.-% und besonders bevorzugt von etwa 10 bis etwa 30 Gew.-%, basierend auf dem Gesamtgewicht der polymerisierbaren Zusammensetzung, vorliegen.

Anorganische Füllstoffe werden vorzugsweise in einer Menge von etwa 0 bis 40% in die polymerisierbare Zusammensetzung einbezogen, während organische Füllstoffe vorzugsweise in einer Menge im Bereich von 0 bis 50% in der polymerisierbaren Zusammensetzung enthalten sind.

Ein weiterer Aspekt der vorliegenden Erfindung betrifft Kompositstrukturen, die nach einem wie vorstehend erläuterten Verfahren erhältlich sind.

Die vorliegende Erfindung betrifft ebenfalls die Verwendung von Zusammensetzungen, umfassend ein latentes Alklyboran als Haftvermittler für die Beschichtung von Substraten, die ungesättigte Einheiten enthalten. Im Rahmen dieser Verwendung enthalten oder umfassen die Substrate vorzugsweise ebenfalls EPDM, SBR und/oder NBR. Es ist besonders bevorzugt, wenn die Substrate aus EPDM, SBR und/oder NBR bestehen.

*"Haftvermittler"* bedeutet im Zusammenhang mit der vorliegenden Erfindung, dass die Zusammensetzung für eine Vorbehandlung des Substrats eingesetzt wird und selbst im Wesentlichen frei von Dekomplexierungsmittel ist. Der Haftvermittler hat in der Regel eine von der beabsichtigten Anwendung, wie einem Lack, einer Versiegelung oder einem Klebstoff abweichende Zusammensetzung. "Im Wesentlichen" ist, wie es vorstehend gebraucht wird, so aufzufassen, dass die Zusammensetzung weniger als etwa 5 Gew.-%, vorzugsweise weniger als etwa 2 Gew.-% und besonders bevorzugt keine Dekomplexierungsmittel enthält.

In einer besonders bevorzugten Ausführungsform wird die vorstehend beschriebene Zusammensetzung als Haftvermittler für die Verklebung von Substraten verwendet, die ungesättigte Einheiten enthalten. Dabei ist es bevorzugt, wenn die Zusammensetzung als Primer für die Verklebung von EPDM-Membranen oder zur Reparatur oder zum Splicen von EPDM-Förderbändern eingesetzt wird. Bei der Reparatur von Förderbändern wird die vorstehend beschriebene Zusammensetzung als Haftvermittler eingesetzt, auf den eine Füllmasse zum Verschließen der Fehlstellen aufgebracht wird.

Wie vorstehend angedeutet ist eine ein latentes Alkylboran enthaltende Zusammensetzung als Vorbehandlung zum Splicen oder für die Reparatur von Bändern, insbesondere von Förderbändern aus EPDM oder anderen Materialien, die auf ihrer Oberfläche ungesättigte Einheiten aufweisen, geeignet. Ein weiterer Aspekt der vorliegenden Erfindung betrifft daher ein Verfahren zum Splicen von elastischen Bändern, vorzugsweise EPDM-Bändern, mit Verstärkungselementen umfassend:

a) zumindest partielles Freilegen der Verstärkungselemente der Bänder,
b) Aufbringen einer Zusammensetzung, die mindestens ein latentes Alkylboran umfasst und im Wesentlichen frei von Dekomplexierungsmitteln für das latente Alkylboran ist, auf die Verstärkungselemente und gegebenenfalls die Kanten der Bänder,
c) Aufbringen eines Klebstoffs auf die mit dem latenten Alkylboran vorbehandelten Flächen, und
d) Aushärtenlassen des Klebstoffs unter Bildung einer Kompositstruktur.

Mit einem "partiellen Freilegen" der Verstärkungselemente ist gemeint, dass zumindest ein Teil der auf den Verstärkungselementen aufgebrachten Beschichtung aus dem elastischen Bandmaterial entfernt wird. Ein vollständiges Entfernen des elastischen Bandmaterials von den Verstärkungselementen ist in der Regel nicht erforderlich. Das Entfernen kann, je nach Dicke und Dimension des Bandes mit einem geeignete Verfahren, beispielsweise durch Herausschneiden von Bandmaterial erzielt werden.

Mit "Kanten der Bänder" ist die Bereiche des Bandes gemeint, in dem sich das Band von seiner ursprünglichen Dicke auf die nach dem Entfernen des Bandmaterials eingestellten Dicke verjüngt.

Die Verstärkungselemente des elastischen Bandes bestehen vorzugsweise aus einem Gewebe oder Textil oder aus Stahlseilen. Weist das Band Verstärkungselemente aus einem Gewebe oder Textil auf, so wird zweckmäßig am Bandende ein Teil der Beschichtung aus dem elastischen Material, das sich über oder unter dem Verstärkungselement befindet, entfernt. Bei zwei über ein Splicen zu verbindenden Bandenden wird dabei vorzugsweise an einem Bandende Bandmaterial oberhalb und an dem anderen Bandende Bandmaterial unterhalb des Verstärkungselements entfern. Enthält das Band mehrere Schichten an Verstärkungselementen, so kann auch eine oder mehrere dieser Schichten entfernt werden, solange das Band danach noch mindestens eine Verstärkungselementschicht aufweist.

Bevorzugt wird an den beiden Bandenden so viel Bandmaterial entfernt, dass die Oberfläche des einen Bandendes bei einem Übereinanderlegen der zu verbindenden Bandenden mit der Oberfäche des anderen Bandendes eine Ebene bildet (d.h. es sollte keine Stufe entstehen). Dies hat den Vorteil, dass eine Blockierung des Bandlaufs bei dessen vorgesehener Verwendung, beispielsweise durch Abstreifungs- oder Reinigungsvorrichtungen des Bandes, vermieden wird.

Bestehen die Verstärkungselemente des elastischen Bandes aus Stahlseilen, so wird vorzugsweise auch Bandmaterial im Zwischenraum von zwei Stahlseilen eines Bandendes entfernt. Dadurch können bei Splicen die Bandenden nicht nur übereinandergelegt werden, sondern so zusammengefügt werden das ein Stahlseilende des einen Bandendes zwischen zwei Stahlseilenden des anderen Bandendes zu liegen kommt, und umgekehrt. Dadurch lässt sich sicher und einfach gewährleisten, dass das verbundene Band eine einheitliche Oberfläche ohne Überstand eines der beiden ehemaligen Bandenden aufweist.

Für bevorzugte Ausführungsformen des Klebstoff und der Zusammensetzung, die mindestens ein latentes Alkylboran umfasst, gelten die vorstehenden Ausführungen analog.

Der Klebstoff kann in einer Menge aufgetragen werden, dass er nach dem Aushärten den Bereich elastischen Bandes füllt, der bei einem nicht gespliceten Band durch das elastische Bandmaterial gefüllt wäre. Es ist jedoch auch möglich, dass der Klebstoff nur den Zwischenraum zwischen den Stahlseilen füllt, während oberhalb und/oder unterhalb der Stahlseile mindestens ein flächiges Element vorgesehen ist, das mit der Ober- und/oder Unterseite der Bandenden flächig abschließt. In der Konfiguration von zwei flächigen Elementen, die mit der Ober- und Unterseite der Bandenden flächig abschließen, bildet sich nach dem Splicen im Verbindungsbereich der beiden Bandenden eine Sandwichstruktur, in der eine Schicht aus Stahlseilen und dem Klebstoff von zwei Schichten der flächigen Elemente eingefasst wird.

In einer Ausführungsform des erfindungsgemäßen Verfahrens ist es demzufolge bevorzugt, wenn im Bereich der freigelegten Verstärkungselemente, insbesondere der Stahlseile, flächige Elemente aus elastischem Bandmaterial vorgesehen sind, die sich über den Bereich der freigelegten Verstärkungselemente des Bandes erstrecken, dass die Zusammensetzung im Schritt b) auf diese Elemente aufgebracht wird, dass die Elemente im Schritt c) unter Ausbildung einer Sandwichstruktur mit dem aufgebrachten Klebstoff in Kontakt gebracht werden und diese Sandwichstruktur im Schritt d) ausgehärtet wird.

Auch wenn die Verstärkungselemente aus Stahlseilen bestehen ist es bevorzugt, wenn das Verfahren so durchgeführt wird, dass das hergestellt Band im Bereich der Verklebung keinen Überstand eines der beiden ehemaligen Bandenden aufweist. Dies lässt sich beipielsweise sicherstellen, indem vor dem Aushärten des Klebstoffs die Oberfläche des Bandes im Bereich der Verklebung geglättet und überschüssiger Klebstoff entfernt wird.

Das mindestens ein flächige Element kann entweder aus demselben Material wie das Band oder aus einem anderen elastischen Material bestehen, sofern dieses Material an seiner Oberfläche ungesättigte Einheiten aufweist. In einer Ausführungsform besteht das flächige Element aus demselben Material wie das Band, vorzugsweise aus EPDM. In einer anderen Ausführungform besteht das flächige Element aus vulkanisiertem Gummi.

Die Festigkeit des gesplicten Bandes hängt wesentlich von Oberfläche ab, in der sich die Bandenden oder

Verstärkungselemente der beiden Bandenden überlappen. Ein größerer Überlappungsbereich führt dabei regelmäßig zu einer festeren Klebeverbindung. Weist das zu splicende Band Verstärkungselemente aus Stahlseilen auf, so beträgt die Splicelänge (d.h. die Länge, über die die Stahlseilenden beider Bandenden ineinandergreifen) vorzugsweise mindestens 140 mm, besonders bevorzugt mindestens 160 mm. Höhere Splicelängen, d.h. Längen von mehr als 300 mm, führen in der Regel nicht mehr zu verbesserten Verklebungen. Aufgrund des höheren Materialbedarf für Klebstoff und Vorbehandlungsmittel sind daher Splicelängen von mehr als 300 mm weniger bevorzugt.

Ein letzter Aspekt der vorliegenden Erfindung betrifft schließlich ein elastisches Band, das nach einem wie vorstehend geschilderten Verfahren erhältlich ist.

Durch die vorstehende Erfindung wird ein einfaches und kostengünstiges Verfahren zur Verfügung gestellt, mit dem es möglich ist, schwer zu verklebende Materialien, die EPDM, NBR oder SBR oder Gemische hiervon enthalten oder aus diesen bestehen, zu verkleben oder zu beschichten. Im Gegensatz zum Stand der Technik ist dieses Verfahren mit den Vorteilen verlängerter Offenzeiten, verkürzter Aushärtungszeiten und verbesserten Lagerstabilitäten der eingesetzten Klebstoffe verbunden. Weiterhin können für die Verklebung kommerziell erhältliche Acrylatklebstoffe verwendet werden, so dass die Verklebung der genannten Materialien auf kostengünstige Art und Weise möglich ist.

Die vorstehende Erfindung liefert ebenso ein leichtes Verfahren zum Splicen von elastischen Bändern, das die Nachteile des Standes der Technik, insbesondere die Erforderlichkeit eines Vulkanisierens von Gummimaterial vermeidet. Durch die gute Haftung auf dem Substrat ist ein vollständiges Freilegen der Verstärkungselemente in der Regel nicht erforderlich. Zudem entfällt eine Berücksichtungung einer eventuellen Unverträglichkeit des nicht-vulkanisierten Gummis mit dem Band.

Im Folgenden wird die vorliegende Erfindung anhand einiger nicht beschränkender Beispiele beschrieben, die jedoch in keiner Weise den Schutzumfang der Anmeldung beschränken sollen.

Beispiel 1

Haftvermittler mit verschiedenen Gehalten an Organoboranaminkomplexen werden hinsichtlich einer Verklebung von NBR- und SBR-Kautschuken mit dem Klebstoff Sika Fast®-5211NT (beruhend auf Tetrahydrofurfurylmethacrylat) untersucht. Für die Testverbindung wird ein NBR bzw. SBR-Substrat mit einer Haftvermittlerzusammensetzung, umfassend verschiedene Mengen an Triethylboran-Diaminopropankomplex (gelöst in Heptan) behandelt. Für die Messung wurde der Haftvermittler mit Hilfe eines Pinsels aufgetragen. Nach dem Auftrag des Haftvermittlers und Ablüften für einen Zeitraum von 15 bis 30 min verblieb dieser mit Schichtdicke von etwa 2 $\mu$m auf dem Substrat. Anschließend wird der Klebstoff in einer Schichtdicke von 1 mm auf die behandelte Fläche aufgetragen. Die Torsionsfestigkeit der Verklebung wurde mit folgender Prüfvorschrift bestimmt:

Zunächst wurde ein runder Aluminiumprüfkörper (kranzförmig, Aussendurchmesser 25 mm; Innendurchmesser 15 mm) mit Schleifpapier 60-100 aufgerauht. In diesen Prüfköper wurde anschließend ein runder PTFE Spacer eingesetzt, der über den Prüfköper hinausragt und dazu dient, eine Klebstoffdicke von 1 mm einzustellen. Dann wurde der vorgemischte Klebstoff auf die Aluminiumform aufgetragen. Die Aluminiumform wurde anschließend mit der Klebstoffseite auf ein Substrat gedrückt, sodass der Klebstoff im Bereich der Aluminiumform abzüglich des Spacers angeordnet war. Mit Hilfe eines Spatels wurde überschüssiger Klebstoff, der beim Aufsetzen des Prüfkörpers auf das Substrat aus der Fuge herausgepresst worden ist, entfernt. Nach Aushärten des Klebstoffs über 24h bei 23 °C und 50 % relativer Luftfeuchtigkeit wurde auf dem Aluminiumprüfkörper eine Schraube befestigt, die als Gegenstück und Angriffspunkt für die Testmaschine dient. Danach wurde die Torsionsfestigkeit mit Hilfe der Testmaschine bestimmt, wobei das Testgerät das Drehmoment beim Nachgeben der Klebeverbindung misst, aus der die Torsionsfestigkeit berechnet wird. Die angegebenen Werte entsprechen dem Mittelwert aus drei Einzelmessungen.

Die Ergebnisse sind in Tabelle 1 wiedergegeben:

Tabelle 1:

| | | Konzentrationsreihe Boran-Aktivator (TEB-DAP) → | | | | | | | |
|---|---|---|---|---|---|---|---|---|---|
| NBR gelb Kautschuk | Vorbehandlung | BO 0 % | BO 2,5 % | BO 5 % | BO 10 % | BO 15 % | BO 20 % | BO 25 % | ADPrep |
| | Klebstoff | 5211NT | 5211NT | 5211NT | 5211NT | 5211NT | 5211NT | 5211NT | 5211NT |
| | Torsionsfestigkeit [MPa] | 0,42 | 5,88 | 5,32 | 6,92 | 6,31 | 4,83 | 6,35 | 0,33 |
| | | | | | | | | | |
| SBR Schwarz Kautschuk | Vorbehandlung | BO 0 % | BO 2,5 % | BO 5 % | BO 10 % | BO 15 % | BO 20 % | BO 25 % | ADPrep |
| | Klebstoff | 5211NT | 5211NT | 5211NT | 5211NT | 5211NT | 5211NT | 5211NT | 5211NT |
| | Torsionsfestigkeit [MPa] | 1,57 | 3,92 | 3,97 | 4,18 | 3,93 | 2,48 | 2,91 | 1,42 |

BO = Boran-Komplex gelöst in Heptan, Angabe in Gewichtsprozent
TEB-DAP = Triethylboran-Diaminopropan-Komplex
ADPrep = Sika® ADPrep (Standard Primer für 2K-Acrylatklebstoffe)
5211NT = SikaFast®-5211NT

Es zeigt sich, dass bereits mit Mengen von 2,5 Gew.-% an Triethylboran-Diaminopropankomplex im Primer eine wesentliche Verbesserung der Torsionsfestigkeit des Klebstoffs gegenüber der Behandlung mit einem Standardprimer, der aus verschiedenen monomerischen Acrylaten und Dihydroxybenzol sowie Isopropanol bestand, erzielt werden kann.

Beispiel 2

Ein Haftvermittler mit einem Gehalt von 15 Gew.-% Triethylboran-Diaminopropan-Komplex (gelöst in Heptan) wird analog Beispiel 1 mit verschiedenen Klebstoffen getestet. Als Blindprobe wird an Stelle des Triethylboran-Diaminopropankomplexes Isopropanol eingesetzt. Von den Verklebungen wurde analog Beispiel 1 die Torsionsfestigkeit bestimmt. Die Resultate dieser Tests sind in Tabelle 2 dargestellt. Bei der Verwendung des Triethylboran-Diaminopropankomplexes zeigt sich ein wesentlicher Effekt auf die Torsionsfestigkeit gegenüber der Verwendung von Isopropanol als Blindprobe. Allerdings zeigt der Primer, enthaltend den Triethylboran-Diaminopropankomplex bei zwei kommerziellen Polyurethanklebstoffen (SikaGlaze®IG-50 und Sikaflex®-221) keine Verbesserung der Torsionsfestigkeit gegenüber einer Probe, bei der das Substrat nicht mit Triethylboran-Diaminopropankomplex behandelt wird.

Tabelle 2: Kombination Boran-Aktivator (BO 15%, Gewichtsprozent) mit verschiedenen Kleb/Dichtstoffen

| **NBR** | | | | | | |
|---|---|---|---|---|---|---|
| Vorbehandlung | BO 15% | BO 15% | BO 15% | IPA | IPA | IPA |
| Klebstoff | 5211NT | IG50 | SikaFlex-221 | 5211NT | IG50 | SikaFlex-221 |
| Torsionsfestigkeit [MPa][1] | 6,31 | 0,95 | 0,61 | 0,18 | 0,98 | 1,27 |
| **SBR** | | | | | | |
| Vorbehandlung | BO 15% | BO 15% | BO 15% | IPA | IPA | IPA |
| Klebstoff | 5211NT | IG50 | SikaFlex-221 | 5211NT | IG50 | SikaFlex-221 |
| Torsionsfestigkeit [MPa][1] | 3,93 | 0,79 | 0,74 | 1,64 | 1,10 | 1,28 |
| [1] = Mittelwert aus drei Einzelmessungen<br>IPA = Isopropanol<br>IG50 = SikaGlaze® IG50 | | | | | | |

Beispiel 3

Zwei verschiedene EPDM-Substrate werden analog Beispiel 1 mit Isopropylalkohol (IPA), 2,5%-Gew.%igem oder 15%-Gew.%igem Triethylboran-Diaminopropankomplex in Hexan behandelt. Anschließend werden die vorbehandelten Substrate abgelüftet und verschiedene Klebstoffe aufgebracht. Dann wird die mittlere Schälkraft gemäß DIN EN ISO 11339:2010-06 pro Breite in 100 mm/min nach 18 Tagen Lagerung bei Raumtemperatur bestimmt. Die Klebstoffschichtdicke für diese Bestimmung betrug 1 mm. Die Ergebnisse der Messungen sind in der folgenden Tabelle 3 dargestellt.

Tabelle 3

| | **EPDM Sika Vorbehandlung mit IPA** | | **EPDM Sika Vorbehandlung mit 2,5% BO** | | **EPDM Sika Vorbehandlung mit 15% BO** | |
|---|---|---|---|---|---|---|
| **SikaFast-5211NT** | 1,25 N/mm | Substratausriss (oberflächennah) | 1,18 N/mm | SF | 1,36 N/mm | SF |
| **SikaFlex-20AT** | - | | 1,68 N/mm | SCF | 0,22 N/mm | AF |
| **SikaFlex-221** | - | | 0,18 N/mm | AF | 0,02 N/mm | AF |
| | **EPDM Rocholl IPA** | | **EPDM Rocholl 2,5% BO** | | **EPDM Rocholl 15% BO** | |
| **SikaFast-5211NT** | 0,77 N/mm | AF | 4,61 N/mm | SF | 4,33 N/mm | SF |

(fortgesetzt)

| | EPDM Rocholl IPA | | EPDM Rocholl 2,5% BO | | EPDM Rocholl 15% BO | |
|---|---|---|---|---|---|---|
| **SikaFlex-20AT** | 3,15 N/mm | CF | 2,48 N/mm | 75% CF, 25% AF | 0,07 N/mm | AF |
| EPDM Sika = SikaPlan Facade, dünnes und wenig festes Material mit Perforationen (für Wasserdampf-Durchlässigkeit)<br>EPDM Rocholl = Semperit Material<br>CF = kohäsives Versagen des Klebstoffs<br>AF = adhäsives Versagen (Klebstoff hat sich von Substrat gelöst)<br>SF = Testmaterial gebrochen<br>SCF = substratnahes, kohäsives Versagen des Klebstoffs | | | | | | |

Im Fall der Kombination von EPDM mit einem Acrylatklebstoff (SikaFast®-5211NT) wurde in allen Fällen ein sogenannter substrate failure (SF) festgestellt, der anzeigt, dass das Testmaterial gebrochen war. Hingegen wurde in Fällen der Verwendung von feuchtigkeitsvernetztenden Klebstoffen (Sikaflex®-20AT und Sikaflex®-221) in den meisten Fällen ein sogenannter adhesive failure (AF) festgestellt, bei dem sich der Klebstoff vom Substrat gelöst hatte. In einigen Fällen wurde zusätzlich ein sogenannter cohesive failure (CF) festgestellt, bei dem der Klebstoff gerissen war.

Es zeigt sich demzufolge, dass das erfindungsgemäße Verfahren unter Verwendung von latenten Alkylboranen als Primer eine verbesserte Haftung von radikalisch härtbaren Klebstoffen auf Substraten, wie EPDM, NBR, und SBR bewirkt.

Beispiel 4

Ein EPDM-basiertes Substrat (Förderband-Material) wurde mit verschiedenen Zusammensetzungen analog Beispiel 1 behandelt. Anschließend wurde der Klebstoff SikaFast®-5211NT auf das vorbehandelte Substrat aufgetragen und ausgehärtet. Als Zusammensetzungen wurde 1. reines Ethylacetat, 2. ein Gemisch aus 10 Gew.-% Triethylboran-1,3-diaminopropan und 90 Gew.-% Ethylacetat, 3. ein Gemisch aus 10 Gew.-% Triethylboran-diethylentriamin und 90 Gew.-% Ethylacetat und 4. ein Gemisch aus 10 Gew.-% Tributylboran-Methoxypropylamin und 90 Gew.-% Ethylacetat verwendet. Nach dem Auftragen der jeweiligen Zusammensetzung und Ablüften des Lösungsmittels wurde eine Klebstoffraupe von SikaFast®-5211NT aufgetragen. Die Klebstoffraupe wies Dimensionen von 12.5 mm x 5 mm x 125 mm auf und wurde aufgetragen, indem eine planare Form mit einer Aussparung der vorgenannten Dimension auf das vorbehandelte Substrat aufgelegt und der Klebstoff in diese Aussparung eingefüllt und für 24 h bei 23 °C/50% relativer Luftfeuchtigkeit ausgehärtet wurde. Nach der Aushärtung wurde die Raupenhaftung bestimmt, indem versucht wurde die Raupe manuell vom Substrat abzuziehen. Bei der ersten Zusammensetzung zeigte sich nach der Aushärtung der Klebstoffraupe, dass diese mit der Hand leicht vom Substrat abgezogen werden kann. Bei den übrigen Zusammensetzungen konnte die Raupe nur mit hohem Krafteinsatz vom Substrat abgelöst werden. Dies entspricht in etwa den Beobachtungen in den Beispielen 1 bis 3. Im dritten Fall ließ sich die Raupe nicht mehr von Hand vom Substrat ablösen, ohne dass die Raupe zerstört wurde.

Beispiel 5

Wie in Beispiel 4 beschrieben wurde ein EPDM-basiertes Substrat (Förderband-Material) mit verschiedenen Zusammensetzungen gemäß Tabelle 4 vorbehandelt. Anschließend wurde die Torsionsfestigkeit eine auf die vorbehandelte Oberfläche aufgetragenen Klebstoffs (SikaFast-5221 NT) bestimmt wie dies in Beispiel 1 beschrieben wurde. Die Ergebnisse und Zusammensetzungen dieser Untersuchungen sind in der folgenden Tabelle 4 wiedergegeben:

Tabelle 4:

| | | 1 | 2 | 3 | 4 | 5 | 6 | 7 |
|---|---|---|---|---|---|---|---|---|
| **EPDM Vorbehandlung** | | | | | | | | |
| | Ethylacetat | 100 | 80 | 100 | 99 | 90 | 75 | 50 |
| | Boran-Komplex[1] | | 10 | 0,1 | 0,1 | 0,1 | 0,1 | 0,1 |
| | THFMA[2] | | 10 | | 1 | 10 | 25 | 50 |
| Gesamt | | 100 | 100 | 100,1 | 100,1 | 100,1 | 100,1 | 100,1 |

(fortgesetzt)

| | 1 | 2 | 3 | 4 | 5 | 6 | 7 |
|---|---|---|---|---|---|---|---|
| **EPDM Vorbehandlung** | | | | | | | |
| **Torsionsfestigkeit [MPa]** | 0,5 | 5,8 | 2,5 | 4,7 | 4,4 | 1,4 | 1,2 |
| [1] Triethylboran-1,3-diaminopropan-Komplex; [2] Tetrahydrofurfurylmethacrylat | | | | | | | |

Beispiel 6

Wie in Beispiel 4 beschrieben wurde ein EPDM-basiertes Substrat (Förderband-Material) mit verschiedenen Zusammensetzungen analog Beispiel 1 vorbehandelt. Anschließend wurden wie in Beispiel 4 Raupen verschiedener Klebstoffsysteme auf die vorbehandelten Substrate aufgebracht und für 7d bei 23 °C/50% relativer Luftfeuchtigkeit ausgehärtet. Die Raupenhaftung dieser Klebeverbindung wurde wie in Beispiel 4 beschrieben bestimmt. Die Ergebnisse und Zusammensetzungen dieser Untersuchungen sind in der folgenden Tabelle 5 wiedergegeben:

Tabelle 5:

| **EPDM Vorbehandlung** | Probe 1 | Probe 2 | Probe 3 | Probe 4 |
|---|---|---|---|---|
| Ethylacetat | 100 | 90 | 80 | 80 |
| Boran Komplex[1] | | 10 | 10 | 10 |
| THFMA[2] | | | 10 | |
| Dimethylaminoethylmethacrylat | | | | 10 |
| Total | 100 | 100 | 100 | 100 |
| **Haftung Raupe auf EPDM** | | | | |
| SikaFast-5211 NT | Keine Haftung | Mittlere Haftung | Gute Haftung | Gute Haftung |
| SikaTack Plus | Keine Haftung | Keine Haftung | | |
| SikaFlex-221 | Keine Haftung | Keine Haftung | | |
| [1] Triethylboran-1,3-diaminopropan-Komplex; Tetrahydrofurfurylmethacrylat | | | | |

Die Ergebnisse dieser Untersuchungen zeigen, dass die Haftung von Acrylatklebstoffen wie SikaFast-5211 NT auf EPDM durch Vorbehandlung mit einer Kombination eines Boran Komplexes und Acrylaten im Vergleich zur Verwendung des Boran Komplexes ohne Acrylate weiter verbessert werden kann. Der Vergleich der Proben 3 und 4 zeigt zudem, dass die Art des Acrylat keinen wesentlichen Einfluss auf die erzielte Haftung hat. Bei den beiden auf Polyurethanen basierenden Klebstoffen SikaTack Plus und SikaFlex-221, die keine radikalisch härtbaren Monomere enthalten, zeigt sich hingegen nach der Oberflächenbehandlung mit Boranen keine Verbesserung der Haftung.

Beispiel 7

Entsprechend Beispiel 1 wurden verschiedene Substrate zunächst mit Ethylacetat gereinigt und anschließend mit einer Zusammensetzung aus 80 Gew.-% Ethylacetat, 10 Gew.-% Triethylboran-1,3-diaminopropan-Komplex und 10 Gew.-% Tetrahydrofurfurylmethacrylat vorbehandelt. Anschließend wurden auf die so vorbehandelten Substrate verschiedene Klebstoffe aufgebracht, bei denen es sich um zwei Acrylatklebstoffe (SikaFast-5211 NT und ScotchWeld DP 810) sowie zwei Epoxyklebstoffe (SikaPower 477-R und ScotchWeld DP 490) handelt. Die Torsionsfestigkeiten der Verklebungen wurden mit der in Beispiel 1 angegebenen Prüfvorschrift bestimmt und ist für die verschiedenen Substrate in der folgenden Tabelle 6 wiedergegeben:

Tabelle 6

| **Substrat** | **SBR Rocholl** | | | |
|---|---|---|---|---|
| | SikaFast-5211 NT | SikaPower 477-R | Scotch Weld DP 810 | ScotchWeld DP 490 |
| Reinigung mit Ethylacetat | 0,1 100%AB<br>0,2 100%AB | 7,5 95%AB/5% SB<br>8,2 70%AB/30% SB | 2,8 100%AB<br>3,0 100%AB | 10,6 100%SB<br>10,4 100%SB |
| Boran Aktivator | 5,8 60%KB/40% AB<br>7,0 70%KB/30% AB | 6,9 100%AB<br>7,7 100%AB | 9,2 100%AB<br>7,8 100%AB | 8,2 100%AB 8,6<br>90%AB/10%SB |
| **Substrat** | **NBR Rocholl** | | | |
| | SikaFast-5211 NT | SikaPower 477-R | ScotchWeld DP 810 | ScotchWeld DP 490 |
| Reinigung mit Ethylacetat | 1,9 100%AB<br>1,8 100%AB | 3,5 50% SB /50% AB<br>3,0 SB40%AB60% | 2,0 AB100%<br>1,4 AB100% | 5,2 100%SB<br>5,6 100%SB |
| BoranAktivator | 4,2 KB10%/AB90%<br>3,9 KB10%A/B90% | 2,3 5%SB/95% AB<br>3,0 10%SB/90%AB | 4,0 100%AB<br>4,1 100%AB | 4,0 100%AB<br>4,3 100%AB |
| **Substrat** | **EPDM Rocholl** | | | |
| | SikaFast-5211 NT | SikaPower 477-R | ScotchWeld DP 810 | ScotchWeld DP 490 |
| Reinigung mit Ethylacetat | 4,0 100%SB<br>3,1 100%SB | 1,6 100%AB<br>1,5 100%AB | | 4,2 100%SB<br>3,4 100%SB |
| BoranAktivator | 4,7 60%KB/<br>40%AB*<br>4,8 60%KB/<br>40%AB* | 1,6 100%AB<br>1,7 100%AB | | 1,9 100%SB<br>2,0 100%SB |

In Tabelle 6 bezeichnet AB einen Adhäsionsbruch, SB einen Substratbruch und KB einen Kohäsionsbruch. Die Zahlenangaben für die Torsionfestigkeit sind in MPa. * steht für einen Abhäsonsbruch vom Aluminiumprüfkörper. Es sind jeweils die Werte von zwei Einzelmessungen angegeben.

Die Ergebnisse dieser Untersuchungen zeigen, dass sich bei den beiden Acrylatklebstoffen durch die Vorbehandlung mit dem Borankomplex/Acrylatgemisch die Torsionsfestigkeit der Klebeverbindung erhöht. Im Gegensatz dazu zeigt sich bei den Epoxyklebstoffen durch die Vorbehandlung keine Verbesserung der Torsionsfestigkeit.

Im Weiteren wurde die Schälkraft der Klebstoffe auf verschiedenen Substraten bestimmt. Die dazu notwendigen Messungen und Proben wurden analog Beispiel 2 durchgeführt bzw. hergestellt. Als Vorbehandlungsmittel wurde wie im Vorstehenden eine Zusammensetzung aus 80 Gew.-% Ethylacetat, 10 Gew.-% Triethylboran-1,3-diaminopropan-Komplex und 10 Gew.-% Tetrahydrofurfurylmethacrylat verwendet. Die Ergebnisse dieser Untersuchungen sind in der folgenden Tabelle 7 wiedergegeben.

Tabelle 7

| Substrat | Rocholl EPDM | | | TPO-Membrane Sarnafil® TS-77-15 | PVC-Membrane SikaPlan® 15 G |
|---|---|---|---|---|---|
| | SikaFast-5211 NT | SikaPower 477-R | ScotchWeld DP 490 | SikaFast-5211 NT | SikaFast-5211 NT |
| Reinigung mit Ethylacetat | 4,9 N/mm 70%SB/ 30%AB | 0,67 N/mm 100%AB | 2,7 N/mm 100%AB | 0,46 N/mm 100%AB | 1,7 N/mm 100%AB |
| Boran Aktivator | 4,9 N/mm 100%SB | 1,1 N/mm 100%AB | 3,0 N/mm 100%SB | 0 N/mm 100%AB | 2,1 N/mm 100%AB |

In der Tabelle bezeichnen AB einen Adhäsionsbruch und SB einen Substratbruch. Eine verbesserte Verklebung zeigt sich entweder in einer erhöhten Schälkraft oder in einem erhöhten Anteil an Substratbruch gegenüber einem Adhäsionsbruch.

Auch durch die Untersuchung der Schälkraft wird belegt, dass die Vorbehandlung von EPDM mit Boran-Komplexen zu einer verbesserten Klebeverbindung führt. Bei Substraten wie PVC- und TPO-Membranen (TPO = thermoplastisches Polyolefin), die keine ungesättigten Einheiten enthalten, kann hingegen keine Verbesserung der Klebeverbindung nachgewiesen werden. Daraus lässt sich ableiten, dass die ungesättigten Einheiten im Substrat zumindest teilweise in das Polymer des sich bildenden Klebstoffs eingebunden werden, was bei dem PVC und TPO Substrat nicht möglich ist.

Beispiel 8: Splicen von gewebeverstärkten Bandenden

Zwei Probenköper der Dimensionen 16 mm x 25 mm x 100 mm (Gurttyp 1600 EP 630/4 8/3V) wurden mit Einschnitten von 25 mm Länge und 8 mm Tiefe versehen, so dass die Bandenden überlappend aufeinander gelegt werden können. Die Gewebeverstärkung beider Bandenden blieb dabei intakt. Anschließend wurden die zu verbindenden Bereiche mit Isopropanol, Ethylacetat und Xylol (in dieser Reihenfolge) gereinigt und die Klebefläche wurde mit einer Mischung aus 10 Gew.-% Triethylboran-1,3-diaminopropan-Komplex, 10 Gew.-% THFMA und 80 Gew.-% Ethylacetat bestrichen; dann wurde gewartet, bis das Lösungsmittel verdampft war. Auf die so vorbehandelte Fläche wurde der Klebstoff SikaFast-5211 NT aufgetragen, die beiden Bandenden wurden miteinander verbunden und der Klebstoff wurde wie in Tabelle 8 angegeben ausgehärtet. Von den gespliceten Prüfkörpern wurde anschließend die Zugscherfestigkeit gemäß der EN 1465 bei 23 °C und 50 % relativer Feuchtigkeit (rF) bestimmt. Die Ergebnisse dieser Messungen sind ebenfalls in Tabelle 8 angegeben.

Tabelle 8

| Härtungsbedingungen | Zugscherfestigkeit [MPa] |
|---|---|
| 7 Tage RT | 4,15 |
| 30 Tage RT | 4,48 |
| 28 Tage 40 °C | 4,58 |
| 14 Tage 40°C/ 100% rF | 2,59 |

Beispiel 9: Splicen von Stahlseil-verstärkten Bandenden

Zwei Bandenden eines Gurts des Typs Continental ST 500K 500mm mit jeweils 4 Stahlseilen von 2,7 mm Dicke wurden so vorbereitet, dass die Stahlseile freigelegt und die Kanten der Bänder schräg angeschnitten sind. Die Unter- und Oberseite wies dabei ein Dicke von 4 bzw. 5 mm auf. Für jede Einzelmessung wurden die freigelegten Stahlseile auf eine einheitliche Länge zwischen 120 bis 300 mm gekürzt und so ineinandergelegt, dass die Stahlseilenden des einen Bandes zwischen den Stahlseilenden des anderen Bandes zu liegen kommen. Die zu verbindenden Bereiche der Kanten und Seile wurden mit Isopropanol, Ethylacetat und Xylol (in dieser Reihenfolge) gereinigt und die Klebefläche wurde mit einer Mischung aus 10 Gew.-% Triethylboran-1,3-diaminopropan-Komplex, 10 Gew.-% THFMA und 80 Gew.-% Ethylacetat bestrichen. Dann wurde gewartet, bis das Lösungsmittel verdampft war. In den so vorbehandelten Bereich wurde der Klebstoff SikaFast- 5211 NT aufgetragen.

Bei einigen der Prüfkörper wurde zusätzlich je eine dünne Lage des Prüfköpermaterials eingesetzt. Dieses wurde so ober- und unterhalb der Stahlseile angebracht, dass sich bei der Verbindung eine Sandwichstruktur aus den dünnen Lagen und der Klebstoff/Stahlseilschicht bildetet. In diesem Fall wurden auch die mit dem Klebstoff verbundenen Flächen der dünnen Lagen des Prüfkörpermaterials wie vorstehend beschrieben gereinigt und vorbehandelt.

Vor dem Aushärten wurde die Oberfläche aller Prüfkörper geglättet um eine einheitliche Oberfläche zu erhalten. Die erhaltenen Prüfköper wurden ausgehärtet und auf die Festigkeit der Klebeverbindung getestet, indem die beiden Enden der erhaltenen Prüfkörper in eine Haltevorrichtung eingespannt wurden. Die Haltevorrichtung wurde dann mit einer Geschwindigkeit von 50 mm/min auseinander bewegt. Es wurde jeweils die maximale Kraft beim Reißen des Bandes (Fmax) in N bestimmt. Die Ergebnisse der Messungen sind in der folgenden Tabelle 9 dargestellt.

Tabelle 9

| **Prüfkörperbezeichnung** | **Fmax [N]** |
|---|---|
| Draht | 7774 |
| Prüfkörper ohne splice | 24628 |
| Prüfkörper mit 120 mm splice[1] | 15637 |

(fortgesetzt)

| Prüfkörperbezeichnung | Fmax [N] |
|---|---|
| Prüfkörper mit 120 mm splice[2] | 20554 |
| Prüfkörper mit 140 mm splice[1] | 19173 |
| Prüfkörper mit 140 mm splice[2] | 21437 |
| Prüfkörper mit 160 mm splice[1] | 21369 |
| Prüfkörper mit 160 mm splice[2] | 23395 |
| Prüfkörper mit 200 mm splice[1] | 21707 |
| Prüfkörper mit 200 mm splice[2] | 24280 |
| Prüfkörper mit 300 mm splice[1] | 23342 |
| Prüfkörper mit 300 mm splice[2] | 22959 |
| [1] Splicebereich bestand nur aus den Stahlseilen und dem Klebstoff; [2] Splicebereich bestand aus einer Sandwichstruktur von zwei Lagen des Prüfkörpermaterials, die um die Stahlseile/den Klebstoff als Zwischenschicht angeordnet sind. | |

Bei den Prüfkörpern mit 120 mm bzw. 140 mm Splicelänge wurde ein Versagen des Spilcebereichs festgestellt, wobei jedoch jeweils Kräfte im Bereich von 15.000 bis 21.500 N erforderlich waren. Bei Splicelängen ab 160 mm hielten die Verklebungen, die Bänder gaben aber im Bereich des Bandmaterials oder der Seile nach. Hierzu waren Kräfte von mehr als 20.000 N erforderlich.

## Patentansprüche

1. Verfahren zur Behandlung von Substraten, umfassend

   a) das Aufbringen einer Zusammensetzung, die mindestens ein latentes Alkylboran umfasst und im Wesentlichen frei von Dekomplexierungsmitteln für das latente Alkylboran ist, auf ein Substrat (1), das ein ungesättigte Einheiten aufweisendes Material umfasst, das ein unpolares Kautschuk-artiges Material oder ein Kautschuk ist, das/der einen E-Modul, bestimmt gemäß DIN 53457, von ≤ 1000 MPa aufweist,
   b) das Aufbringen einer radikalisch härtbaren Substanz auf das mit dem latenten Alkylboran vorbehandelte Substrat (1), und
   c) das Aushärtenlassen der radikalisch härtbaren Substanz unter Bildung einer Kompositstruktur.

2. Verfahren nach Anspruch 1, **dadurch gekennzeichnet, dass** es sich bei der radikalisch härtbaren Substanz um einen Lack, eine Beschichtung, ein Versiegelungsmaterial, einen Klebstoff oder eine Füllmasse handelt.

3. Verfahren nach Anspruch 1 oder 2, **dadurch gekennzeichnet, dass** zwischen dem Schritt b) und dem Schritt c) das Substrat (1) mit einem Substrat (2) derart in Kontakt gebracht wird, dass die radikalisch härtbare Substanz zwischen den beiden Substraten angeordnet ist, und die radikalisch härtende Substanz in Form eines Klebstoffs vorliegt.

4. Verfahren gemäß einem der Ansprüche 1 bis 3, **dadurch gekennzeichnet, dass** es sich bei dem ungesättigte Einheiten aufweisenden Material um ein Material auf Basis von EPDM, NBR, SBR oder ein Gemisch davon handelt.

5. Verfahren gemäß einem der Ansprüche 1 bis 4, **dadurch gekennzeichnet, dass** das Substrat (1) aus dem ungesättigte Einheiten aufweisenden Material besteht.

6. Verfahren gemäß einem der Ansprüche 1 bis 5, **dadurch gekennzeichnet, dass** es sich bei der radikalisch härtbaren Substanz um eine auf Acrylaten beruhende Substanz, bevorzugt einen Acrylatklebstoff, handelt.

7. Verfahren gemäß einem der Ansprüche 1 bis 6, **dadurch gekennzeichnet, dass** die Zusammensetzung, umfassend mindestens ein latentes Alkylboran, einen pH-Wert von etwa 7 oder mehr aufweist.

8. Verfahren gemäß einem der Ansprüche 1 bis 7, **dadurch gekennzeichnet, dass** die Zusammensetzung, umfassend mindestens ein latentes Alkylboran, weiterhin ein Lösungsmittel, vorzugsweise ausgewählt aus Hexan, Heptan, Xylol, Ethylacetat oder Gemischen davon, und/oder mindestens ein radikalisch härtbares Monomer, vorzugsweise ein Acrylat, enthält.

9. Verfahren gemäß einem der Ansprüche 1 bis 8, **dadurch gekennzeichnet, dass** die Konzentration des mindestens einen latenten Alkylborans in der Zusammensetzung etwa 2,5 bis 30 Gew.-%, vorzugsweise etwa 2,5 bis 20 Gew.-%, beträgt.

10. Verfahren gemäß einem der Ansprüche 1 bis 9, **dadurch gekennzeichnet, dass** das auf das Substrat aufgebrachte latente Alkylboran mit einem Dekomplexierungsmittel, vorzugweise ausgewählt aus organischen oder anorganischen Säuren, Isocyanaten oder Lewis-Säuren, in Kontakt gebracht wird.

11. Verfahren gemäß einem der Ansprüche 1 bis 10, **dadurch gekennzeichnet, dass** das latente Alkylboran in Form eines Trialkylboranaminkomplexes vorliegt, in dem die Alkylgruppe gleich oder verschieden ist und 1 bis 6, vorzugsweise 1 bis 4 Kohlenstoffe, aufweist.

12. Verfahren gemäß Anspruch 11, **dadurch gekennzeichnet, dass** das Amin im Trialkylboranaminkomplex in Form eines Alkylendiamins mit mindestens einer primären Aminogruppe vorliegt, in dem die Alkylengruppe vorzugsweise 2 bis 6, besonders bevorzugt 2 bis 4 Kohlenstoffatome, enthält.

13. Kompositstruktur, erhältlich nach einem Verfahren gemäß einem der Ansprüche 1 bis 12.

14. Verwendung einer Zusammensetzung, umfassend ein latentes Alkylboran als Primer für die Behandlung von Substraten, die ungesättigte Einheiten enthalten, wobei das Substrat ein unpolares Kautschuk-artiges Material oder einen Kautschuk umfasst, das/der einen E-Modul, bestimmt gemäß DIN 53457, von ≤ 1000 MPa aufweist.

15. Verwendung einer Zusammensetzung, umfassend ein latentes Alkylboran als Primer für die Verklebung von Substraten, die ungesättigte Einheiten enthalten, wobei die Substrate ein unpolares Kautschuk-artiges Material oder einen Kautschuk umfassen, das/der einen E-Modul, bestimmt gemäß DIN 53457, von ≤ 1000 MPa aufweist, vorzugsweise von EPDM-Membranen oder zur Reparatur oder zum Splicen von EPDM-Förderbändern.

16. Verfahren zum Splicen von elastischen Bändern aus Materialien, die auf ihrer Oberfläche ungesättigte Einheiten aufweisen, wobei das Material ein unpolares Kautschuk-artiges Material oder einen Kautschuk umfasst, das/der einen E-Modul, bestimmt gemäß DIN 53457, von ≤ 1000 MPa aufweist, vorzugsweise EPDM-Bändern, mit Verstärkungselementen umfassend:

a) zumindest partielles Freilegen der Verstärkungselemente der Bänder,
b) Aufbringen einer Zusammensetzung, die mindestens ein latentes Alkylboran umfasst und im Wesentlichen frei von Dekomplexierungsmitteln für das latente Alkylboran ist, auf die Verstärkungselemente und gegebenenfalls die Kanten der Bänder,
c) Aufbringen eines Klebstoffs auf die mit dem latenten Alkylboran vorbehandelten Flächen, und
d) Aushärtenlassen des Klebstoffs unter Bildung einer Kompositstruktur.

17. Verfahren nach Anspruch 16, **dadurch gekennzeichnet, dass** im Bereich der freigelegten Verstärkungselemente flächige Elemente aus elastischem Bandmaterial vorgesehen sind, die sich über den Bereich der freigelegten Verstärkungselemente des Bandes erstrecken, dass die Zusammensetzung im Schritt b) auf diese Elemente aufgebracht wird, dass die Elemente im Schritt c) unter Ausbildung einer Sandwichstruktur mit dem aufgebrachten Klebstoff in Kontakt gebracht werden und diese Sandwichstruktur im Schritt d) ausgehärtet wird.

18. Elastisches Band erhältlich nach einem Verfahren gemäß Anspruch 16 oder 17.

## Claims

1. Method for treating substrates, comprising

a) applying a composition which comprises at least one latent alkylborane and is substantially free from decomplexing agents for the latent alkylborane to a substrate (1) which comprises a material having unsaturated units, which material is an apolar rubberlike material or a rubber which has a modulus of elasticity, determined in accordance with DIN 53457, of ≤1000 MPa,
b) applying a radically curable substance to the substrate (1) pretreated with the latent alkylborane, and
c) curing the radically curable substance to form a composite structure.

**2.** Method according to Claim 1, **characterized in that** the radically curable substance is a paint, a coating, a sealing material, an adhesive or a filling compound.

**3.** Method according to Claim 1 or 2, **characterized in that** between step b) and step c), the substrate (1) is contacted with a substrate (2) such that the radically curable substance is disposed between the two substrates, and the radically curing substance is in the form of an adhesive.

**4.** Method according to any of Claims 1 to 3, **characterized in that** the material having unsaturated units is a material based on EPDM, NBR, SBR, or a mixture thereof.

**5.** Method according to any of Claims 1 to 4, **characterized in that** the substrate (1) consists of the material having unsaturated units.

**6.** Method according to any of Claims 1 to 5, **characterized in that** the radically curable substance is a substance based on acrylates, preferably an acrylate adhesive.

**7.** Method according to any of Claims 1 to 6, **characterized in that** the composition comprising at least one latent alkylborane has a pH of about 7 or more.

**8.** Method according to any of Claims 1 to 7, **characterized in that** the composition comprising at least one latent alkylborane further comprises a solvent, preferably selected from hexane, heptane, xylene, ethyl acetate, or mixtures thereof, and/or comprises at least one radically curable monomer, preferably an acrylate.

**9.** Method according to any of Claims 1 to 8, **characterized in that** the concentration of the at least one latent alkylborane in the composition is about 2.5 to 30 wt%, preferably about 2.5 to 20 wt%.

**10.** Method according to any of Claims 1 to 9, **characterized in that** the latent alkylborane applied to the substrate is contacted with a decomplexing agent, preferably selected from organic or inorganic acids, isocyanates, or Lewis acids.

**11.** Method according to any of Claims 1 to 10, **characterized in that** the latent alkylborane is present in the form of a trialkylborane-amine complex in which the alkyl group is identical or different and has 1 to 6, preferably 1 to 4, carbons.

**12.** Method according to Claim 11, **characterized in that** the amine in the trialkylborane-amine complex is in the form of an alkylenediamine having at least one primary amino group, in which the alkylene group contains preferably 2 to 6, more preferably 2 to 4, carbon atoms.

**13.** Composite structure obtainable by a method according to any of Claims 1 to 12.

**14.** Use of a composition comprising a latent alkylborane as primer for the treatment of substrates which contain unsaturated units, wherein the substrate comprises an apolar rubberlike material or a rubber which has a modulus of elasticity, determined in accordance with DIN 53457, of ≤1000 MPa.

**15.** Use of a composition comprising a latent alkylborane as primer for the adhesive bonding of substrates which contain unsaturated units, wherein the substrates comprise an apolar rubberlike material or a rubber which has a modulus of elasticity, determined in accordance with DIN 53457, of ≤1000 MPa, preferably of EPDM membranes or for the repair or for the splicing of EPDM conveyor belts.

**16.** Method for splicing elastic belts from materials which have unsaturated units on their surface, wherein the material comprises an apolar rubberlike material or a rubber which has a modulus of elasticity, determined in accordance with DIN 53457, of ≤1000 MPa, preferably EPDM belts, having reinforcing elements, comprising:

a) at least partially exposing the reinforcing elements of the belts,
b) applying a composition which comprises at least one latent alkylborane and is substantially free from decomplexing agents for the latent alkylborane to the reinforcing elements and optionally to the edges of the belts,
c) applying an adhesive to the areas pretreated with the latent alkylborane, and
d) curing the adhesive to form a composite structure.

**17.** Method according to Claim 16, **characterized in that** in the region of the exposed reinforcing elements, sheetlike elements of elastic belt material are provided which extend over the region of the exposed reinforcing elements of the belt, **in that** the composition in step b) is applied to these elements, and **in that** the elements in step c) are contacted with the applied adhesive to form a sandwich structure, and this sandwich structure is cured in step d).

**18.** Elastic belt obtainable by a method according to Claim 16 or 17.

## Revendications

**1.** Procédé de traitement de substrats, comprenant :

a) l’application d’une composition, qui comprend au moins un alkylborane latent et qui est essentiellement exempte d’agents décomplexants pour l’alkylborane latent, sur un substrat (1), qui comprend un matériau comprenant des unités insaturées, qui est un matériau de type caoutchouc apolaire ou un caoutchouc qui présente un module E, déterminé selon DIN 53457, ≤ 1 000 MPa,
b) l’application d’une substance durcissable par voie radicalaire sur le substrat (1) prétraité avec l’alkylborane latent, et
c) le durcissement de la substance durcissable par voie radicalaire avec formation d’une structure composite.

**2.** Procédé selon la revendication 1, **caractérisé en ce que** la substance durcissable par voie radicalaire consiste en un vernis, un revêtement, un matériau de scellement, un adhésif ou un matériau de remplissage.

**3.** Procédé selon la revendication 1 ou 2, **caractérisé en ce qu’**entre l’étape b) et l’étape c), le substrat (1) est mis en contact avec un substrat (2) de telle sorte que la substance durcissable par voie radicalaire soit agencée entre les deux substrats, et la substance durcissable par voie radicalaire se présente sous la forme d’un adhésif.

**4.** Procédé selon l’une quelconque des revendications 1 à 3, **caractérisé en ce que** le matériau comprenant des unités insaturées est un matériau à base d’EPDM, de NBR, de SBR ou un mélange de ceux-ci.

**5.** Procédé selon l’une quelconque des revendications 1 à 4, **caractérisé en ce que** le substrat (1) est constitué par le matériau comprenant des unités insaturées.

**6.** Procédé selon l’une quelconque des revendications 1 à 5, **caractérisé en ce que** la substance durcissable par voie radicalaire est une substance à base d’acrylates, de préférence un adhésif à base d’acrylates.

**7.** Procédé selon l’une quelconque des revendications 1 à 6, **caractérisé en ce que** la composition comprenant au moins un alkylborane latent présente un pH d’environ 7 ou plus.

**8.** Procédé selon l’une quelconque des revendications 1 à 7, **caractérisé en ce que** la composition comprenant au moins un alkylborane latent contient en outre un solvant, de préférence choisi parmi l’hexane, l’heptane, le xylène, l’acétate d’éthyle ou leurs mélanges, et/ou au moins un monomère durcissable par voie radicalaire, de préférence un acrylate.

**9.** Procédé selon l’une quelconque des revendications 1 à 8, **caractérisé en ce que** la concentration dudit au moins un alkylborane latent dans la composition est d’environ 2,5 à 30 % en poids, de préférence d’environ 2,5 à 20 % en poids.

**10.** Procédé selon l’une quelconque des revendications 1 à 9, **caractérisé en ce que** l’alkylborane latent appliqué sur le substrat est mis en contact avec un agent décomplexant, de préférence choisi parmi les acides organiques ou inorganiques, les isocyanates ou les acides de Lewis.

**11.** Procédé selon l'une quelconque des revendications 1 à 10, **caractérisé en ce que** l'alkylborane latent se présente sous la forme d'un complexe de trialkylborane-amine, dans lequel les groupes alkyle sont identiques ou différents, et comprennent 1 à 6, de préférence 1 à 4, carbones.

**12.** Procédé selon la revendication 11, **caractérisé en ce que** l'amine dans le complexe de trialkylborane-amine se présente sous la forme d'une alkylène-diamine contenant au moins un groupe amino primaire, dans laquelle le groupe alkylène contient de préférence 2 à 6, de manière particulièrement préférée 2 à 4 atomes de carbone.

**13.** Structure composite, pouvant être obtenue par un procédé selon l'une quelconque des revendications 1 à 12.

**14.** Utilisation d'une composition comprenant un alkylborane latent en tant qu'agent primaire pour le traitement de substrats qui contiennent des unités insaturées, le substrat comprenant un matériau de type caoutchouc apolaire ou un caoutchouc qui présente un module E, déterminé selon DIN 53457, ≤ 1 000 MPa.

**15.** Utilisation d'une composition comprenant un alkylborane latent en tant qu'agent primaire pour le collage de substrats qui contiennent des unités insaturées, les substrats comprenant un matériau de type caoutchouc apolaire ou un caoutchouc qui présente un module E, déterminé selon DIN 53457, ≤ 1 000 MPa, de préférence de membranes en EPDM ou pour la réparation ou l'épissage de bandes de transport en EPDM.

**16.** Procédé d'épissage de bandes élastiques en des matériaux qui comprennent des unités insaturées sur leur surface, le matériau comprenant un matériau de type caoutchouc apolaire ou un caoutchouc qui présente un module E, déterminé selon DIN 53457, ≤ 1 000 MPa, de préférence de bandes en EPDM, avec des éléments de renfort, comprenant :

a) le dégagement au moins partiel des éléments de renfort des bandes,
b) l'application d'une composition, qui comprend au moins un alkylborane latent et qui est essentiellement exempte d'agents décomplexants pour l'alkylborane latent, sur les éléments de renfort et éventuellement les bords des bandes,
c) l'application d'un adhésif sur les surfaces prétraitées avec l'alkylborane latent, et
d) le durcissement de l'adhésif avec formation d'une structure composite.

**17.** Procédé selon la revendication 16, **caractérisé en ce que** des éléments plats en un matériau de bande élastique sont prévus dans la zone des éléments de renfort dégagés, qui s'étendent sur la zone des éléments de renfort dégagés de la bande, **en ce que** la composition est appliquée à l'étape b) sur ces éléments, **en ce que** les éléments sont mis en contact à l'étape c) avec l'adhésif appliqué pour former une structure en sandwich, et cette structure en sandwich est durcie à l'étape d).

**18.** Bande élastique pouvant être obtenue par un procédé selon la revendication 16 ou 17.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5718977 A
- US 6248846 B
- US 6383655 B
- US 2011104508 A1
- US 3968198 A
- DE 4308528 A1
- US 6383655 B1
- US 6248846 B1
- US 20030226472 A, Kneafsey
- US 20040068067 A, Kneafsey
- US 6630555 B, Kendall
- US 7247596 B, Jialanella
- US 5539070 A
- US 5106928 A
- US 5686544 A
- US 5883208 A
- EP 08169631 A
- CN 973J75
- EP 630483 A